# EUROPEAN PATENT APPLICATION

(11) **EP 1 296 287 A2**
(43) Date of publication of application: **26.03.2003**
(21) Application number: 02021263.5
(22) Date of filing: 19.09.2002
(51) Int. Cl.: G06T 9/00

(54) **Image information code processing system**

(30) Priority: 21.09.2001 JP 2001290196; 05.07.2002 JP 2002197730
(71) Applicant: Ricoh Company, Ltd., Tokyo 143-8555 (JP)
(72) Inventor: Sano, Yutaka, Sendai-shi, Miyagi (JP); Matsubara, Akio, Yokohama-shi, Kanagawa (JP)
(74) Representative: Schwabe - Sandmair - Marx

(57) **Abstract**

A syntax interpretation part (12) interprets a syntax of a given code sequence; and a code sequence creation part (13) creates another code sequence based on the syntax interpreted by said syntax interpreting part. The given code sequence and the other code sequence both comprise code sequence decompressable to be transformed into still image data.

## Description

### BACKGROUND OF THE INVENTION

### 1. Field of the Invention

The present invention relates to an image processing system, in particular, a code sequence creation device for still images, an image decompression device and an image providing system, a method therefor, a program, and a recording medium therefor.

### 2. Description of the Related Art

In recent years, spread of high definition images is remarkable. This is mainly because of improvement in resolution on various image input devices and image output devices, such as digital still cameras, scanners, ink-jet printers, display devices and so forth.

JPEG (Joint Photographic Experts Group) is most widely used as image compression/decompression algorithm treating such high definition still images. In this method, in order to reduce the degree of redundancy in space domain, 2-dimensional discrete cosine transform is applied.

A basic function of this method is to compress/decompress a still image. Basically, in this method, an image cannot be manipulated in a state of a compressed file, and, also, in case of decompression, it is not possible to decompress only a specific range thereof. Moreover, in this method, image data is regarded as "flat structure" without class/level. Therefore, in order to newly perform processing to an image, the relevant code data surely needs to be decoded entirely.

According to the above-described related art, (1) a relatively long time is needed in image processing before it is actually displayed particularly in case the image becomes of high definition and/or the size thereof becomes increased; and, also (2) it is not possible to select image areas, color components, or decompression order in the decompression operation.

The above-mentioned problem (1) relates to a problem in that, as the number of pixels included in an original image increases, and, also, a time required for decompressing the code data, and a time required for displaying the relevant image values on a display device as an image both increase accordingly.

This problem becomes remarkable as the original image has a high definition property and has a larger size, such trend occurring thanks to improvement in performance of various image input devices.

In fact, this problem has been already serious, and thus, should be solved immediately, in a technical field handling images provided by a satellite, aerial photographs, medical treatment field, and a science field, and, also, in a field handling images which recorded cultural property.

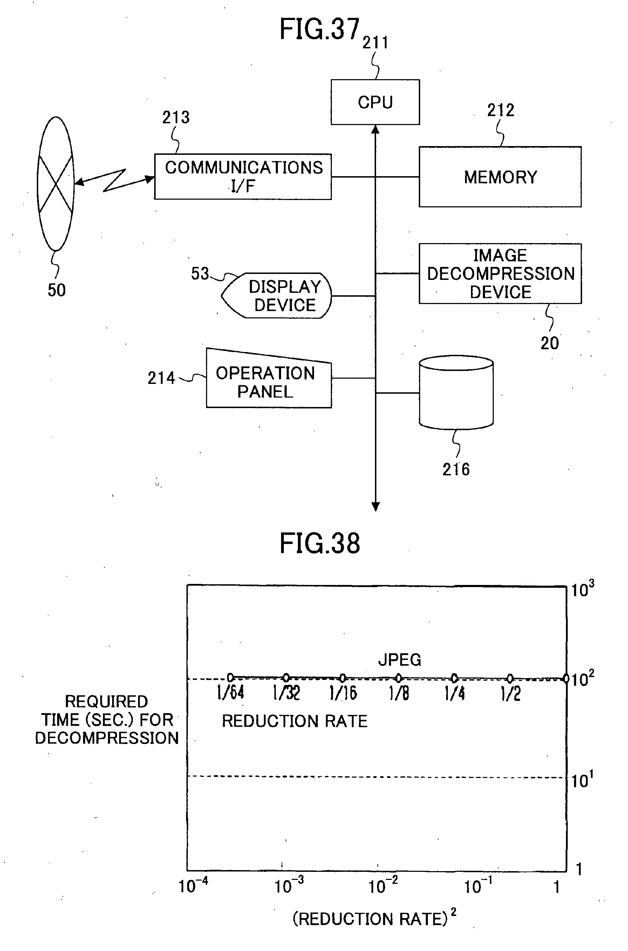

FIG. 38 shows a time required for decompressing a very large sized still image which has been compressed according to JPEG with respect to a size reduction rate. The size reduction rate means a ratio in the number of pixels in vertical or horizontal scale of a displayed image area to a rectangular original image. In this example, the 74M-pixel color image (RGB:24 bit) was used as the original image. It should be noted that the above-mentioned time required for decompression shown in the figure depends on the devices (MPU/DSP/ASIC, etc.) which performs the actual JPEG decompression operation.

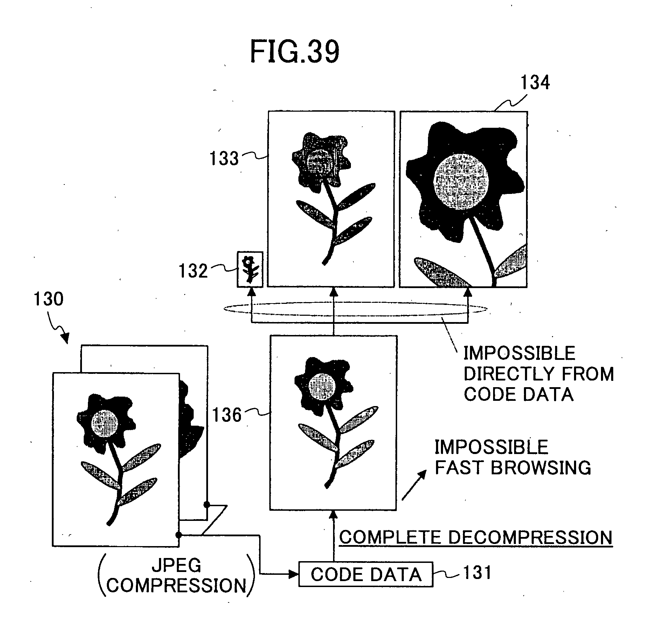

As can be seen from the figure, the time required for decompression of the JPEG compressed image is in a fixed value regardless of the size reduction rate. This is because, as shown in FIG. 39, according to JPEG method, an encoded data should be basically entirely decoded for a display purpose whether or not the display image is reduced in the size.

Usually, since the number of pixels of a display device which can be used has a limitation, it is difficult to display all the pixels of such a large image on the display device. Accordingly, reduction in the size of the image is needed before it is actually displayed.

However, according to the conventional JPEG algorithm, even when such a size-reduced image is displayed, the entire data of the original image is first decompressed, thus the pixel values are calculated for all the pixels, and, after that, thinning processing is performed so as to reduce the number of pixels for enabling display thereof with the small-sized display device. The decompression processing time required in order to calculate all the values of the original image increases in proportion to the number of pixels of the image. Although it depends on the performance of MPU, or the capacity of a memory used, the time of several minutes to dozens of minutes may be required for the display the image for this example.

The above-mentioned problem (2) related to a problem in that, according to the conventional JPEG algorithm, the complete decompression should be made even a user does not necessarily need such an entirely decompressed image. For example, it can be assumed that, as shown in FIG. 39, a user wishes to display a grayscale image 131 of a color image 130, wishes to see a thumbnail image 132 thereof, wishes to browse image contents at high speed, wishes to view motion still images in quick view manner, and so forth. However, even in such a case, it is difficult to respond thereto efficiently according to the conventional JPEG algorithm.

According to the conventional JPEG algorithm, image data which has undergone perfect decompression is generated from the code data 131 obtained through compression of the original image 130 first. Then, a desired style of display image is obtained by transforming the thus-obtained completely decompressed image data into the image data 133 for a gray scale display, the image data 134 for a specific spatial area display, the image data 132 for thumbnail display, etc.

### SUMMARY OF THE INVENTION

The present invention has been devised in consideration of the above-described situations. An object of the present invention is to provide an advanced JPEG image processing scheme by which effective reduction in processing time required for displaying images from code data can be achieved. Specifically, according to the present invention, display of a size-reduced image can be displayed from code data quickly.

Further, according to the present invention, effective decompression operation can be achieved. This can be achieved by means of specific control the decompression operation by a manner, i.e., definition of a specific area of the image to be actually decompressed, definition of a specific color component of the image to be actually decompressed, definition of specific decompression operation order, etc.

According to the present invention, as a given code sequence to be decompressed is modified in a various manner before being decompressed. Thereby, in comparison to the conventional manner in which the given code sequence is once decompressed entirely even in case where the whole of the thus-decompressed image data should not necessary be used, it becomes possible to effectively reduce the time required for the decompression processing by reducing the code amount appropriately beforehand in such a case. Furthermore, in case the code sequence is sent to a remote device via communications network or the like, by thus reducing the code mount beforehand, it becomes possible to effectively reduce the load to be borne by the communications facilities and also to effectively reduce the traffic in the communications network.

Further, by re-arranging the order of codes of the given code sequence before it is decompressed, it is possible to arbitrarily control the order of decompression performed on the original code sequence without actually controlling the decompression operation itself. Thereby, control operation concerning the decompression processing can be simplified even in a case the decompression order is to be controlled.

Other objects and further features of the present invention will become more apparent from the following detailed description when read in conjunction with the accompanying drawings.

### BRIEF DESCRIPTION OF THE DRAWINGS

FIG. 1 illustrates a basic concept of hierarchical encoding compression/decompression algorithm;
FIGS. 2A through 2D illustrate decomposition levels and subbands on a wavelet transform system;
FIG. 3 illustrates a concept of tiles in JPEG2000 scheme;
FIG. 4 illustrates relation between precincts and code blocks according to JPEG2000 scheme;
FIG. 5 illustrates a structure of code stream according to JPEG2000 scheme;
FIG. 6 illustrates a configuration of a code sequence creation device according to an embodiment of the present invention;
FIG. 7 shows a block diagram illustrating a detailed configuration of the code sequence creation device according to the embodiment of the present invention;
FIG. 8 illustrates a method of determining a specific LL subband for the purpose of high-speed reduced-size display according to an embodiment of the present inventing;
FIGS. 9A and 9B show a code stream defined by the 3LL subband of FIG. 8;
FIG. 10 shows a time required, using the code sequence creation device and still image decompression device according to an embodiment of the present invention, when performing decompression operation merely up to respective specific LL subbands;
FIG. 11 shows a code stream of each LL subband of FIG. 10;
FIG. 12 illustrates various decompression modes which can be achieved by using the code sequence creation device and still image decompression device according to an embodiment of the present invention;
FIG. 13 illustrates a case a spatial area to be decompressed is limited to a central part according to an embodiment of the present invention;
FIG. 14 shows a code stream newly generated in a manner shown in FIG. 13;
FIG. 15 illustrates a manner of dividing a given code sequence according to an embodiment of the present invention;
FIG. 16 illustrates a manner of extracting a limited color component and then performing size-reduction operation, according to an embodiment of the present invention;
FIG. 17 illustrates a manner of creating a code stream according to the manner shown in FIG. 16;
FIG. 18 illustrates a manner of controlling the order of decompression operations according to an embodiment of the present invention;
FIG. 19 illustrates another manner of controlling the order of decompression operations according to an embodiment of the present invention;
FIG. 20 illustrates a detailed configuration of a code sequence creation device according to another embodiment of the present invention;
FIG. 21 illustrates a concept of time-shift display according to an embodiment of the present invention;
FIG. 22 illustrates an image decompression system according to an embodiment of the present invention;
FIG. 23 illustrates an image provision system according to an embodiment of the present invention;
FIG. 24 illustrates an image provision system according to another embodiment of the present invention;
FIG. 25 shows a flow chart which illustrates a code sequence creation method according to an embodiment of the present invention;
FIG. 26 illustrates a manner of code sequence combination according to an embodiment of the present invention;
FIG. 27 illustrates a manner of code sequence combination according to another embodiment of the present invention applying authentication key system;
FIG. 28 illustrates a manner of code sequence combination according to another embodiment of the present invention applying a counter for counting times of usage of the authentication key;
FIG. 29 illustrates a system according to an embodiment of the present invention described with reference to FIGS. 27 and 28;
FIG. 30 illustrates an embodiment according to the present invention applied to a system processing motion still images in which even and odd frames of animation data are separated/combined;
FIG. 31 illustrates an embodiment according to the present invention applied to a system processing motion still images in which a specific LL subband is extracted for each frame;
FIG. 32 illustrates an embodiment according to the present invention applied to a system processing motion still images in which frames are thinned out depending on whether or not a relevant scene includes quick motion;
FIG. 33 illustrates an embodiment according to the present invention applied to a system processing motion still images in which a specific spatial area of each frame is made to be displayed finely;
FIG. 34 illustrates a system according to an embodiment of the present invention processing motion still images;
FIG. 35 shows a flow chart illustrating processing for the system shown in FIG. 28;
FIG. 36 shows a flow chart illustrating processing for the system shown in FIG. 34;
FIG. 37 illustrates a configuration which can embody a system according to each embodiment of the present invention;
FIG. 38 illustrates a relation between decompression time and reduction rate in the conventional scheme; and
FIG. 39 illustrates a problems occurring in a conventional scheme.

### DETAILED DESCRIPTION OF THE PREFERRED EMBODIMENTS

First, 'hierarchical encoding algorithm' and 'JPEG2000 algorithm' which are applied to each embodiment of the present invention will now be described briefly.

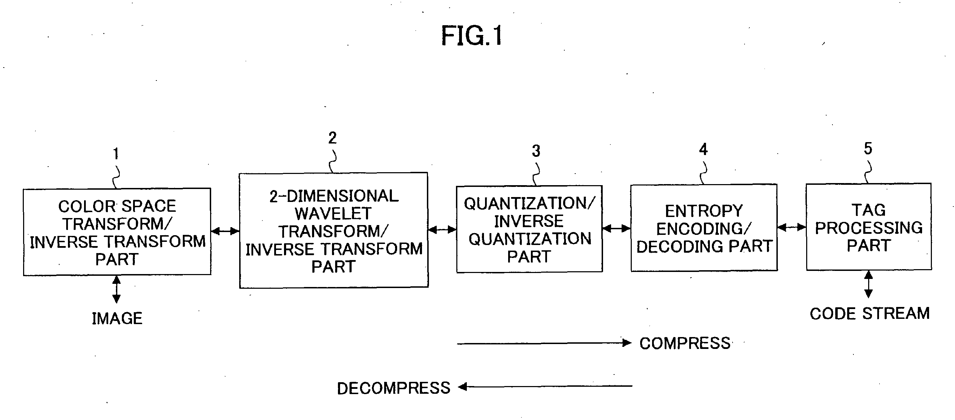

FIG. 1 illustrates the hierarchical encoding algorithm which JPEG2000 is based on. This hierarchical encoding algorithm includes a 2-dimensional wavelet transform and inverse transform part 2, a quantization and inverse quantization part 3, an entropy encoding/decoding part 4, and a tag processing part 5. As compared with the conventional JPEG algorithm, one of the most greatly different points of this hierarchical encoding algorithm lies in its transform method.

In the conventional JPEG, discrete cosine transform (DCT) is used, while discrete wavelet transform (DWT) is used in the hierarchical encoding compression/decompression algorithm. The quality of image of DWT in a highly compressed area is superior in DWT compared with DCT, and it is one of main reasons for which JPEG2000 employs DWT which is a succeeding algorithm of JPEG. Moreover, in DWT, different from DCT, the functional block called the tag processing part 5 is added, in order to perform code formation, at the last stage. In this part, at a time of compression operation, compressed data is generated as a code stream, and, then, interpretation of the code stream required for decompression is performed there at a time of decompression operation. By applying the form of code stream, JPEG2000 can provide various convenient functions.

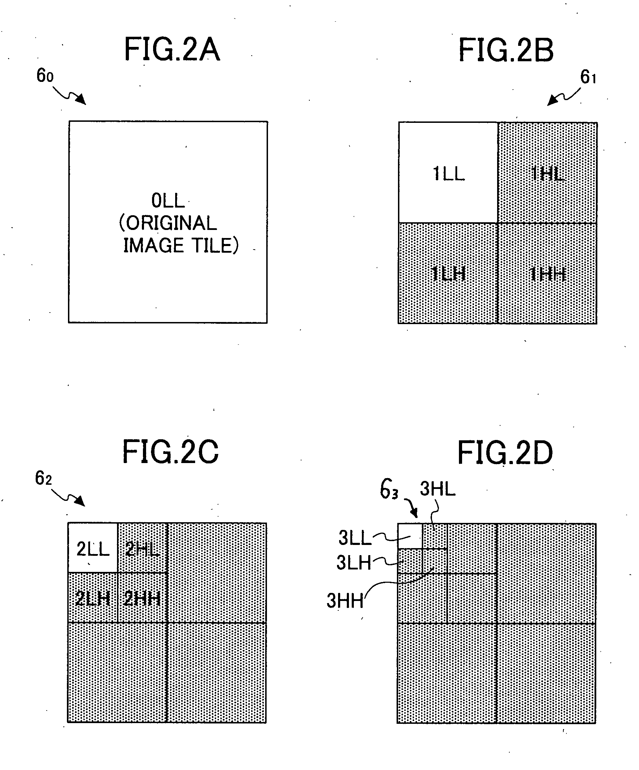

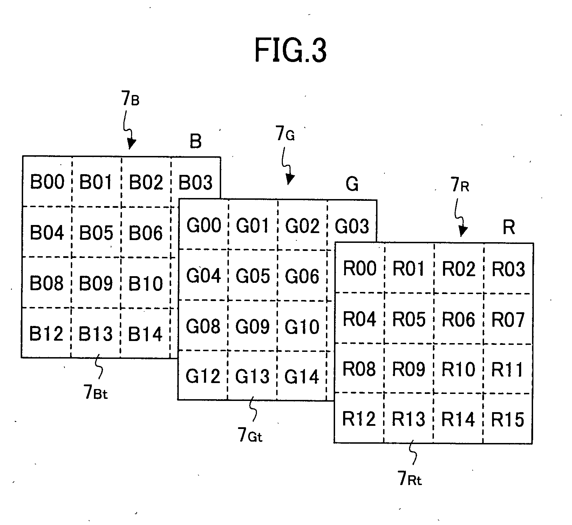

For example, as shown in FIGS. 2A through 2D showing a subband in each decomposition level in case the number of decomposition levels is 3, according to the hierarchical encoding algorithm, it is possible to terminate compression/decompression processing at an arbitrary level in octave classification according to DWT on block basis shown in FIGS. 2A through 2D. For your reference, the term 'decomposition' is defined by JPEG2000 Part I, FDIS (Final Draft International Standard) as follows:
'A collection of wavelet subbands where each coefficient has the same spatial impact or span with respect to the source component samples. These include the HL, LH, and HH subbands of the same two dimensional subband decomposition. For the last decomposition level, the LL subband is also included'.

In FIG. 1, a color space transform part 1 may be provided at an input-and-output portion for an original image in the configuration. For example, this part performs color transform or inverse color transform from a complementary-color YMC (yellow/magenta/cyan) color expressing system or a primary-color RGB (red/green/blue) color expressing system into a YUV or YCbCr color expressing system.

The JPEG2000 algorithm will now be described in detail. FIG. 3 shows an example of each color component of a color image, which is spatially divided into tiles. As shown in the figure, each of color components 7R, 7G and 7B according to the RGB primary system is divided into tiles 7Rt, 7Gt, 7Bt. There, each tile, i.e., R00, R01, ..., R15,/G00, G01, ..., G15 /B00, B01, ..., B15 is used as a basic unit at a time of performing compression/decompression process for example. Accordingly, compression/decompression operation is independently performed for every component, and for every tile.

At a time of encoding, the data of each tile of ea ch component is input to the color space transform part of FIG. 1, and undergoes predetermined color space transform. After that, the data is classified into frequency bands through the 2-dimensinal wavelet transform part 2.

Subbands in each decomposition level in case the number of decomposition levels is 3 are shown in FIGS. 2A through 2D as mentioned above. As shown in the figure, a tile of original image (0LL) 60 on a decomposition level 0 obtained by above-mentioned tile division shown in FIG. 2A is divided into subbands (1LL, 1HL, 2LH and 1HH) 61 of respective frequency bands as shown in FIG. 2B, through the two-dimensional wavelet transform by the relevant processing part 2. After that, also by means of the two-dimension wavelet transform part 2, two-dimensional wavelet transform is performed on the low-frequency-band subband 1LL, and, thereby, this subband is further divided into subbands (2LL, 2HL, 2LH, 2HH) in. respective frequency bands. Similarly, also by means of the two-dimension wavelet transform part 2, two-dimensional wavelet transform is performed on the low-frequency-band subband 2LL, and, thereby, this subband is further divided into subbands (3LL, 3HL, 3LH, 3HH) in respective frequency bands again.

In FIGS. 2A through 2D, the subbands which should be encoded in each decomposition level are indicated as filled with half-tone dots. For example, when the number of decomposition levels is 3 as mentioned above, the subbands (3HL, 3LH, 3HH, 2HL, 2LH, 2HH, 1HL, 1LH, 1HH) shown with half-tone dots undergo encoding, while 3LL subband shown in FIG. 2D is not encoded. As mentioned above, 3LL subband is further divided on the deeper decomposition level. Then, on the final level, the LL subband is also encoded.

Subsequently, the thus-obtained wavelet coefficients are quantized into bit planes for each subband. Then, according to a predetermined order, for each bit of each bit plane, a context is obtained based on peripheral bits.

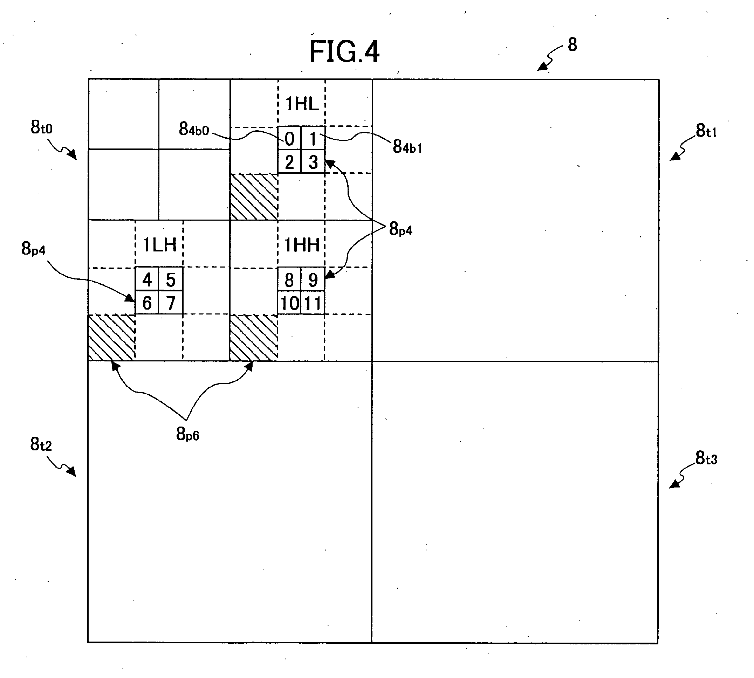

FIG. 4 illustrates relation between precinct and code block. The wavelet coefficients thus undergone the quantization are divided into rectangles called 'precincts', each of which does not overlap with any other ones, for each subband. The concept of the precincts is applied for the purpose of efficient usage of memory at a time of implementation. As shown in FIG. 4, one precinct 8p4, for example, includes three rectangle areas spatially coincident with each other on the original image. Similarly, a precinct 8p6 includes three rectangle areas spatially coincident with each other on the original image. It is noted that the original image 8 has been divided into four precincts, i.e., 8t0, 8t1, 8t2, and 8t3, on the decomposition level 1. Further, each precinct is divided into 'code blocks' (for the precinct 8p4, it is divided into the code blocks 84b0, 84b1, ..., 8b10 and 8b11), each being a rectangle not overlapping with any other ones. The code blocks are used as basic units at a time. of entropy coding.

For the purpose of improving encoding efficiency, the coefficient values may be decomposed into bit-plain units, then, the order may be determined for the bit planes every pixel or code block, and then, layers each having one or a plurality of bit planes may be set. In such a case, each layer has significance on the bit planes, and, then, encoding is performed for each layer. For example, encoding may be performed only on the most significant layer (concerning MSB, for example) and subsequent several layers, and the other remaining layers may be truncated.

In the entropy coding part 4, a probability estimation scheme is applied for encoding the tiles of each color component from the contexts and target bits thereof. In this way, encoding processing is performed per tile for all the components of the original image.

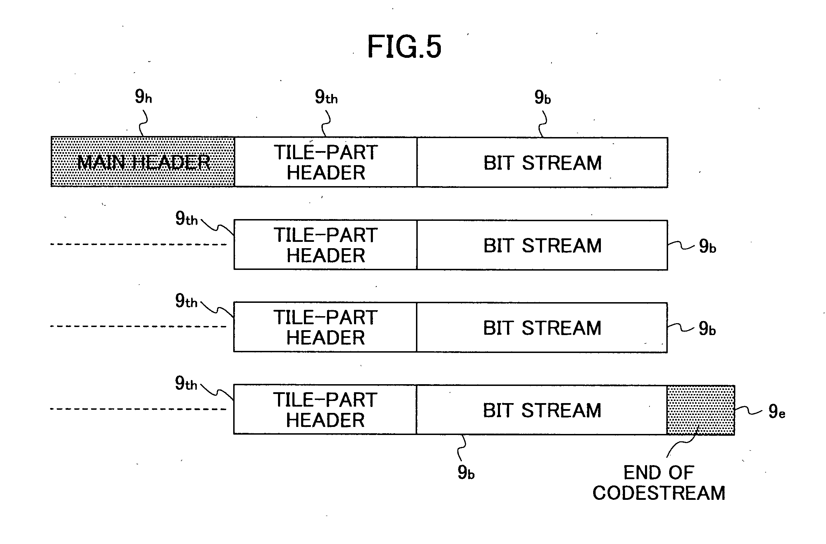

Finally, the tag processing part 5 performs processing of connecting all the code data output from the entropy coding part 4 into one code stream, and also, adding tags thereto. FIG. 5 illustrates the structure of the code stream. Tag information called headers (respectively main header 9h and tile part headers 9th) is added to the head of the code stream, and to the head of each part corresponding to the particular tile, and the coding data (bit stream 9b) on each tile follows thereafter. Then, to the last of the code stream, a tag (EOC tag 9e) is added.

On the other hand, at a time of decoding, image data is generated from a given code stream for each tile of each component, inversely to the above-described case of encoding. This will now be described briefly using a FIG. 1. In this case, the tag processing part 5 interprets the tag information added as mentioned above, from the code stream given from the exterior, the code stream is decomposed into a code stream of each tile of each component, and decoding processing is performed for every code stream of each tile of each of that component.

The position of bit position to be currently decoded is determined by the order obtained based on the tag information interpreted from the given code stream, and, also, in the inverse quantization part 3, the context is generated from the arrangement of peripheral bits (already decoded) of the thus-determined target bit. In the entropy decoding part 4, also the probability estimation method is applied for generating the target bit from the code stream and the thus-generated context. Then, the result is written at a relevant position in the restored image.

As the thus-decoded data is those spatially classified for the respective frequency bands, each tile of each component of the image data is restored through the two-dimensional wavelet inverse transform by means of the two-dimensional wavelet inverse transform part 2. The restored data is transformed into the data of the original color expressing system by the color space inverse transform part 1.

Embodiments of the present invention will now be described.

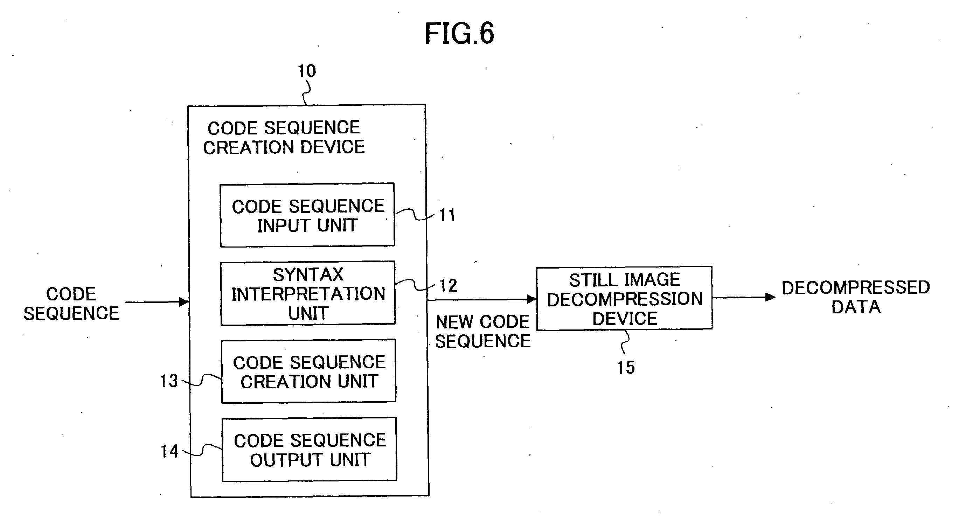

FIG. 6 illustrates a configuration of a code sequence creation device according to an embodiment of the present invention. As shown in the figure, the code sequence creation device 10 is connected with a still image decompression device 15.

According to the embodiment of the present invention, a code sequence obtained from compressed/encoded image data, especially, high-definition image data is modified in a predetermined manner so as to create a new code sequence. Thereby, it becomes possible to achieve reduction in time required for processing the data so as to display it in a predetermined size-reduced manner, or to achieve efficient image decompression by determining an image area to be decompressed, a color component to be decompressed, the order of the decompression operation. The image data to be processed by the embodiment of the present invention is not only of a simple still image but also of a motion picture or animation in a form of successive still images, or the like. Especially, according to the embodiment of the present invention, before inputting into the still image decompression device 15, the code data is processed as being reduced in the code amount, divided into different code sequences, re-arranged in code order, or the like.

As showing in FIG. 6, the code sequence creation device 10 includes a code sequence input unit 11, a syntax interpretation unit 12, a code sequence creation unit 13, and a code sequence output unit 14. Through the code sequence input unit 11, a code sequence having a form such as to be able to be decompressed by the still image decompression device 15 is input. Then, the syntax interpretation unit 12 interprets the syntax of the code sequence thus input. The syntax of the code sequence means a format of the code sequence defined in order to interpret the code sequence, and includes information such as the beginning of the code sequence, the end thereof, the code style, the manner in which the codes are arranged, and so forth.

The code sequence creation unit 13 creates another code sequence (new code sequence) to be decompressed by the still image decompression device 15 from the given code sequence based on the syntax of the code sequence interpreted by means of the syntax interpretation unit 12. The code sequence output unit 14 outputs the other new code sequence thus created by means of the code sequence creation unit 13.

A code sequence which can be input by means of the code sequence input unit 11 and/or processed by means of the code sequence creation device 13 may preferably be any type of one distributed widely based on a standard like JPEG2000 (ISO/IEC FCD 15444-1), or Motion-JPEG2000 (ISO/IEC FCD 15444-3). In case a code sequence according to JPEG 2000 is applied to the embodiment of the present invention, a user can easily handle it by means of the devices 10 and 15 shown in FIG. 6, without taking into account of any issue concerning compatibility in file format, and, to be able to view high-definition still image with a short time, or to enjoy motion picture with smooth motion.

The above-mentioned new code sequence input or created by means of the creation unit 13 may be a code sequence of motion picture in which each of a plurality of successive still images is used as a frame. In such a case, according to the embodiment of the present invention, it is possible to reproduce a smooth motion without frame omission. Furthermore, it becomes also possible to search the contents by viewing a thumbnail motion picture.

As the code sequence creation unit 13, a code amount reduction unit may be applied. Thereby, based on the syntax of the code sequence interpreted by the syntax interpretation unit 12, another code sequence is created having the code amount reduced from the original one. For this purpose, the header information concerning the syntax of the code sequence is previously included in the input code sequences specified by JPEG2000, and the syntax is interpreted based on the header information by the syntax interpretation unit 12. Furthermore, in the other new code sequence output from the code sequence creation unit 13, header information is added thereto by means of a header information adding unit provided therein. As the other new code sequence thus has the header information concerning this other new code sequence added therein, this new code sequence can be easily decompressed/decoded by a decoding/decompressing device.

Moreover, it is possible that this code amount reduction unit may include a unit by which a user can give instructions thereto of activating this code amount reduction function, input the amount to be reduced, the target code sequence which is to be processed by this code amount reduction unit, and so forth.

As the code amount reduction unit thus extracts only required codes from the original code sequence, the code sequence corresponding to a desired manner of image decompression operation can be obtained. Consequently, an image decompression device which has this new code stream input thereto automatically performs the above-mentioned desired manner of image decompression operation. Accordingly, extra operation to be made by a user can be effectively omitted, and the decompression speed and electric power needed therefor in the MPU/DSP/exclusive-use LSI can be greatly reduced as a result.

Further, it is also possible that the above-mentioned code sequence creation unit 13 may include a code sequence re-arrangement unit. By this code sequence re-arrangement unit, as the other new code sequence to be output, a code sequence obtained through re-arrangement of the order of the codes from that of the given code sequence is obtained, based on the syntax of the code sequence decoded with the syntax interpretation unit 12. For example, same as the above, the above-mentioned header information is added in the code sequence, and the syntax is interpreted beforehand based on the header information by the syntax interpretation unit 12. As the other new code sequence thus has the header information concerning this other new code sequence added therein, this new code sequence can be easily decompressed/decoded by a decoding/decompressing device. Moreover, it is possible that this code sequence re-arrangement unit may include a unit by which a user can give instructions thereto of activating this code sequence re-arrangement function, input a specific manner of re-arranging the order of the codes, and so forth.

Also, by thus performing 'extraction', and/or 'replacement' of codes according to different manners, it becomes possible to create a plurality of different code streams accordingly. Thus, as a result of rearranging the order of codes in the given code sequence being performed by the code sequence re-arrangement unit, and, then, decompression thereof being performed by the subsequent image decompression device 15, the process of display thereof can be arbitrarily controlled according to a specific purpose, or a user's preference, or the like.

Further, it is also possible that the above-mentioned code sequence creation unit 13 may include a multi code sequence creation unit. By this multi code sequence creation unit, as the other new code sequence to be output, a plurality of different code sequences are created, based on the syntax of the code sequence decoded with the syntax interpretation unit 12. For example, same as the above, the above-mentioned header information is added in the given code sequence, and the syntax is interpreted beforehand based on the header information by the syntax interpretation unit 12. As the other new code sequence thus has the header information concerning this other new code sequence added therein, this new code sequence can be easily decompressed/decoded by a decoding/decompressing device.

Moreover, it is possible that this multi code sequence creation unit may include a unit by which a user can give instructions thereto of activating this multi code sequence creation function, input a specific number of the plurality of code sequences to be thus created, each type of these code sequences to be created, and so forth. Thereby, it becomes possible to create a plurality of new code sequences by performing different processing thereon, and, thus, it becomes possible to enable display of the same image contents through a display device having different display sizes, for example. Specifically, for example, this scheme is advantageous in a case where a size-reduced display is made through a small-sized display device included in a mobile unit.

Instructions to be made by a user described above in the description of the respective variations of the code sequence creation means 13 will now be described in detail. As a unit/device for a user to input the instructions, units/devices for inputting the decomposition level of a code sequence to be newly created, an image area to be decompressed, a component to be decompressed, and so forth, respectively, may be expected. Instructions of a user concerning the above-motioned image area to be decompressed may be those indicating specific tiles, or precincts. Instructions of a user concerning the above-mentioned component to be decompressed may be those indicating a color space of one of R(red) G(green) B (blue), Y (luminance) U (blue color difference) V (red color difference), Y (luminance) Cb (blue color difference) Cr (red color difference), C (cyan) M (magenta) Y (yellow) K (black). Further, by specifying a depth of layer/level up to which decompression is performed, a spatial area, or a color component, or the like to be decompressed, it is possible to effectively reduce the amount of codes included in the thus-created new code sequence. Furthermore, the order of the decompression operations may be specified similarly, i.e., for example, by commencing the decompression operations from the highest decomposition level, or the lowest layer, or by commencing the decompression operations from the image area with a predetermined highest precedence. Specifically, by replacing the order of codes in the given code sequence, it is possible to change the order of decompression operations.

By specifying the decomposition level up to which decompression is performed, it is possible to define the code sequence to be decompressed up to the predetermined subbands. Thereby, it becomes possible to achieve high-speed display of a reduced-sized image, i.e., for example, 'size-reduction rate of n-th power of 1/2, for example, 1/2, 1/4, 1/8, 1/16, ..., as descried later. Thereby, it becomes possible to remarkably reduce the time required for the display in comparison to the case of conventional JPEG2000 scheme. Moreover, by performing size-change operation at the same time, it becomes possible to perform size-reduced display of image in a size which is just fit to the display area of a given display device. On the other hand, by specifying an image area to be decompressed, and/or a color component to be decompressed, it is possible to further improve the display speed by reducing the code amount of the code sequence to be processed. Furthermore, it becomes possible to cause a specific area of a given image to be displayed through decompression directly from the code data, or a grayscale display of a given color image to be achieved through decompression directly from the code data thereof. Further, by thus inputting various instructions concerning the decompression operations, the order of codes in the code sequence may be changed. Accordingly, it becomes possible to arbitrarily control a manner of transition of display states from the start of reproduction to the end thereof. For example, it becomes possible to cause a specific image area which a user wishes to see first to be displayed with the highest priority. Thus, by utilizing the above-mentioned features, it becomes also possible to improve the efficiency in image content search.

The new code sequence created by the code sequence creation device 10 mentioned above is finally decompressed by the still image decompression device 15, the thus-obtained decompressed data is displayed on a display device, it is printed out by a printer, is transmitted via facsimile, or the like.

The present invention may include an image decompression system including the above-mentioned code sequence creation device, a code sequence storage device storing the new code sequence thus created by the code sequence creation device, and the still image decompression device which decompresses the new code sequence. By storing various forms of the new code sequences in the code sequence storage device beforehand in this case, it becomes possible that a user can view the relevant image in an arbitrary manner for the purpose of a particular usage form.

The present invention may also be embodied as an image provision system including the above-mentioned code sequence creation device and code sequence storage device. As for the code sequence storage device, it is preferable to include a plurality of storage units spread in a predetermined communications network. By this image provision system, it is possible to provide a relevant image in various forms as a result of various forms of the new code sequences being created and stored in these storage units beforehand. In this case, on a client side, by means of the image decompression device 15, a required new code sequence beforehand acquired from the code sequence storage device through the network is decompressed. Alternatively, it is also possible that, when a request is given by a client device via the network, the image provision system detects the capability of the client device for processing code sequences, selects a form of new code sequence which is beforehand created and stored, suitable to the thus-detected capability of the client device, and transmits it to the client device via the network.

In either case, it is also possible that the client side includes another code sequence creation device, and then, the thus-obtained code sequence is further transformed by means of this code sequence creation device of its own, before it is decompressed. Moreover, it becomes possible to search for desired image contents of the new code sequence stored in the code sequence storage device from the new code sequences beforehand generated by the code sequence creation device and stored in the storage device, by means of an image search unit to search still images containing a desired image. That is, the new code sequence is utilized for a management of the image contents.

According to the above-mentioned image decompression system or image provision system, it becomes possible that various forms of new code sequences created are stored on a communications network in a spread/dispersion manner. Accordingly, memories arranged spread in the network and storing these various forms of code sequences therein beforehand can be used as a so-called code cache. Further, by thus storing the various forms of code sequences in the spread manner beforehand, provision of the code sequence to an image decompression device on a client side can be made at high speed, and, also, a possible trouble occurring at the network can be flexibly dealt with. In addition to the application as the code cache, there are other variable applications of the above-described system according to the present invention to a time-shift motion picture decompression form, or the like.

As another application of the present invention, it is possible to incorporate the code sequence creation device into an image decompression device connected to a communications network. This image decompression device decompresses the code sequence acquired through the network based on a decompression method unique to the device. Thus, the function performing processing of code sequences is incorporated into an agent device connected to the network. The agent device which creates new code sequences may be located at any position in a system or the network.

The above-described various forms of the present invention can be embodied by means of one or a plurality of general-purpose computer, i.e., a personal computer, or the like, by installing one or a plurality of software programs thereinto for causing the computer to execute the various functions described above. As storage media to store these software programs to be loaded in and read information therefrom by the computer, a CD-ROM, a magneto-optical disk, a DVD-ROM, an FD, a flash memory, a memory stick, and any other types ROM and RAM etc., may be used freely.

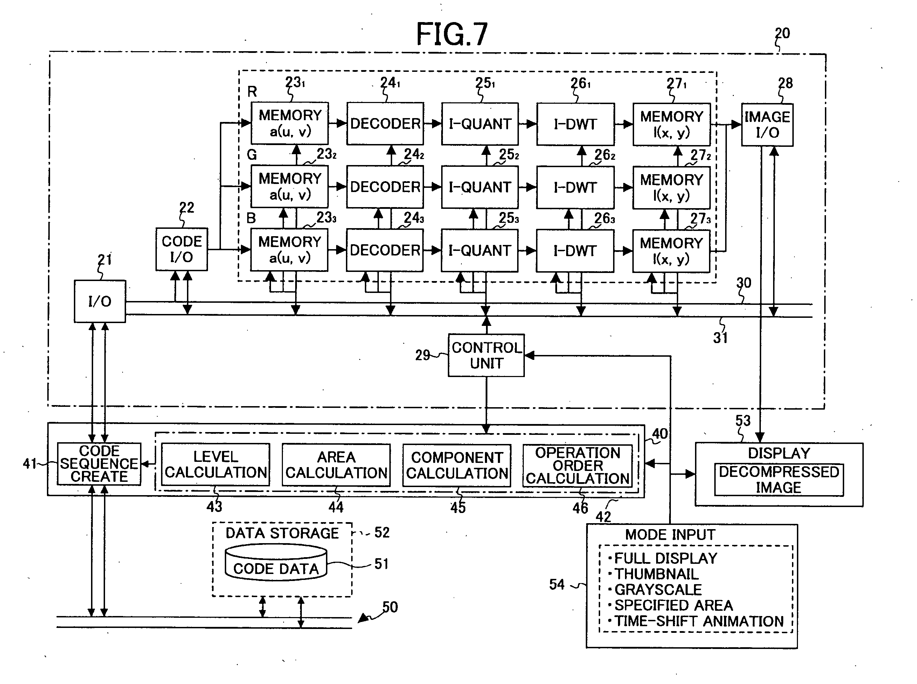

The code sequence creation device to be used together with the still image decompression device will now be described in detail. Before describing the code sequence creation device, the still image decompression device will now be described first. As shown in FIG. 7, the still image decompression device includes a unit 22 which inputs code data, units 23 to store the wavelet coefficient values, units 24 to interpret the wavelet coefficients, units 25 to inverse-quantize the wavelet coefficient values after decoding, inverse wavelet transform units 26 to transform the coefficient values into pixel values, units 27 to store the pixel values after decompression, and a unit 28 to output the thus-obtained decompressed image, and a control unit 29 controlling these respective decompression units. Furthermore, this still image decompression device may be a typical one according to JPEG2000.

FIG. 7 shows a block diagram for illustrating a configuration of the code sequence creation device 40 according to a first embodiment of the present invention. As shown in the figure, the still image decompression device described above connected with the code sequence creation device 40. The code sequence creation device 40 is provided in front of the still image decompression device 20, as shown. The code sequence creation device 40 includes at least one code sequence creation part 41 which creates a code sequence; and a decompression operation setting part 42 which sets up the decompression operation. The decompression operation setting part 42 includes a level number calculation unit 43, an area calculation unit 44, a component calculation unit 45, and an operation order calculation unit 46. These units are used for setting a specific form of a new code sequence to be created by the code sequence creation part 41.

The image decompression device 20 includes an I/O port 21 receiving a code sequence created by the code sequence creation part 41, a code I/O 22 as the input unit for receiving codes from the I/O port 21, and an image I/O 28 as the output unit to output the decompressed image. For every color component (RGB in this example), provided are memories 23₁, 23₂, 23₃ as wavelet coefficient storing units to store the DWT coefficient values 'a (u, v)'; decoders 24₁, 24₂, 24₃ as decoding units; the inverse quantization units 25₁, 25₂, 25₃; DWT 26₁, 26₂, 26₃ as inverse wavelet transformation units; memories 27₁, 27₂, 27₃ as pixel value storing units to store pixel values 'I (x, y)'.

In this embodiment, a user can choose an optimal display method freely according to a particular purpose using a display mode input unit 54. For example, "specific area display" which displays a decompressed/restored image on an image display area specified on a display device 53 is chosen from predetermined sorts of display modes. Then, the level number calculation unit 43 in the decompression operation setting part 42 of the code sequence creation device 40 calculates the number of decomposition level corresponding to the specified display area/size in case a display is performed according to a size-reduction rate of n-th power of 1/2. Based on this calculation result, processing of deleting the codes of subbands exceeding the decomposition level obtained by the calculation from the original code sequence is performed in the code sequence creation part 41. In this way, code stream newly generated by the code sequence creation device 40 is output to the image decompression device 20. For example, the control unit 29 controls the code sequence creation device 40 according to the mode specified by the user through the display mode specification unit 54. Thus, the new code sequence is created, and is output therefrom. Thereby, the image is output onto the display device 53 in the mode requested by the user from the image decompression device 20. The code sequence thus given and processed is obtained by acquiring the code data stored in a storage unit 52 of a data storage device 51 through a communications network 50, while the data and control data are transferred through a data bus and a control bus, respectively, in the image decompression device 20.

Since the code sequence input into the still image decompression device 20 is beforehand limited to "the code sequence up to the optimal decomposition level" as mentioned above, the decompression device 20 performs decompression operation for the specific LL subband near the given display area, and decompression operation is not further performed on the decomposition level exceeding the above-mentioned optimal level. For example, in case 3LL subband is obtained, 4HH, 4HL, 4LH and 4LL on the decomposition level 4 are needed to be decompressed. Accordingly, the decompression operation should be performed only on the decomposition level 4 and more but should not be performed on the decomposition levels 3 through 1.

Thus, the original image is displayed in a state reduced in size in the n-th power of 1/2 on the display device. Such a manner of decompression processing is different from the conventional JPEG2000 decompression in which decoding is performed throughout the entire code data once. Specifically, according to the code sequence creation device according to the present invention, decoding is performed only on a range of code amount which is necessary. Accordingly, the time required for the decompression so as to perform the display of the image can be remarkably reduced in comparison to the conventional JPEG2000 scheme. In case the image area obtained according to 'the reduction rate of n-th power of 1/2' is very far from 'the specified display area', a thinning-out method, interpolation method, or the like is further performed so as to perform further size change operation on the image obtained according to 'the n-th power of 1/2 size reduction'. Thereby, it is possible to obtain the displayed image having the size approximately the same as the specified display area.

FIG. 37 shows a block diagram showing electric connection in the system described with reference to FIG. 7 in one example. This system performs various operations, and, a CPU 211 performs central control of the respective parts of the system. a memory 212 acts as a recording medium including various types of ROMs and RAMs, a predetermined communications interface 213 communicates with the communications network 50, and an operation panel 214 receives various types of operations from a user, which are then connected by a bus 215.

The image decompression device 20, the display device 53, and a hard disk 216 which can function as the data storage device 52 are also connected to the bus 215.

An animation program which processes a video signal is stored in the memory 212 (specifically, a ROM therein) which acts as a recording medium. This animation program acts as a part of the present invention. And,the processing which the CPU 211 performs based on this animation program realizes various functions of the code sequence creation device 40.

A method of calculation performed by the level number calculation unit 43 in case a display is performed on a condition of a display performed according to the above-mentioned 'reduction rate according to n-th power of 1/2' will now be described.

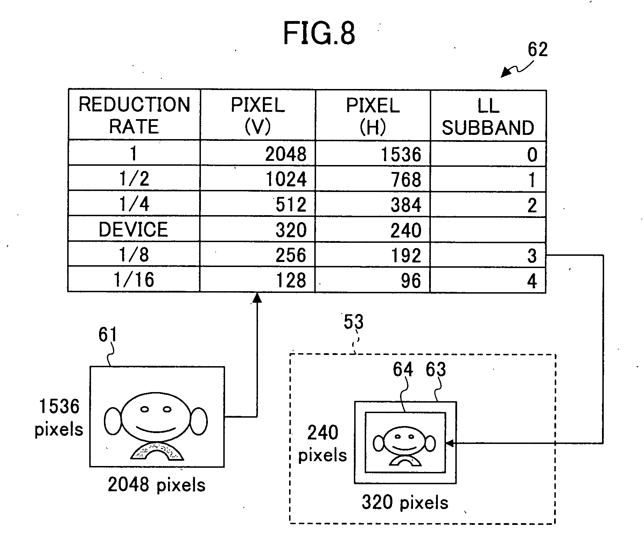

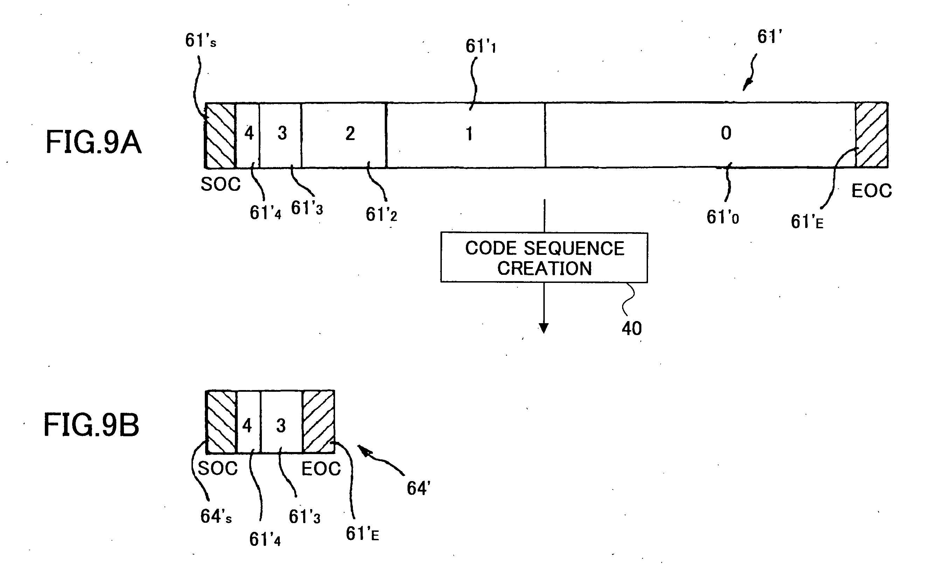

FIG. 8 illustrates how to determine a specific LL subband/decomposition level in a case of a size-reduced display of an original image at high speed in the code sequence creation device according to the embodiment of the present invention in the display. screen. FIGS. 9A and 9B illustrate processing of extracting a code stream including code data up to the decompression level 4 for the subband 3LL shown in FIG. 8.

The state occurring when actually displaying. the image on the display device is shown in a FIG. 8 using the image decompression device 20 and the code sequence creation device 40 shown in a FIG. 7. The decompression operation for the 3LL subband is performed from the original image 61 whose numbers of pixels of width and length are 2048 and 1536 for the 320 (width) pixels × 240 pixels (length) display area (screen) 63 of the display device 53, and the size-reduced image 64 is thus displayed there. In this processing, by the level number calculation unit 43, the decomposition level the nearest to the numbers of pixels less than the numbers of pixels of the display area 63 is calculated (for the subband 3LL in this example) based on a subband (decomposition level) table 62 shown in FIG. 8.

With reference to FIG. 9A, the original code sequence 61' has a code stream including a SOC 61S', codes 61₄', 61₃', 61₂', 61₁' and 61₀' for the subbands 4LL, 3LL, 2LL, 1LL and 0LL, respectively, and an EOC 61E', in the stated order. The tags attached to the head and the last of the code stream are respectively called SOC (Start Of Code stream) and EOC (End Of Code-stream). The thus-created new code stream 64' shown in FIG. 9B is obtained as follows: From the original code stream 61' shown in FIG. 9A, the codes 61₂', 61₁' and 61₀' for the subbands 2LL, 1LL and 0LL are removed, then, the header information SOC 64S' different from the original header information 61S' is attached to the remaining codes 61₄' and 61₃' for the subbands 4LL and 3LL.

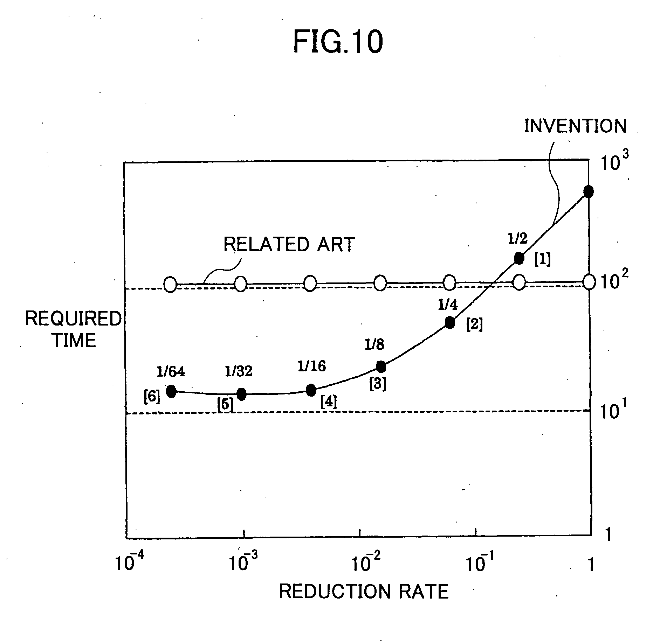

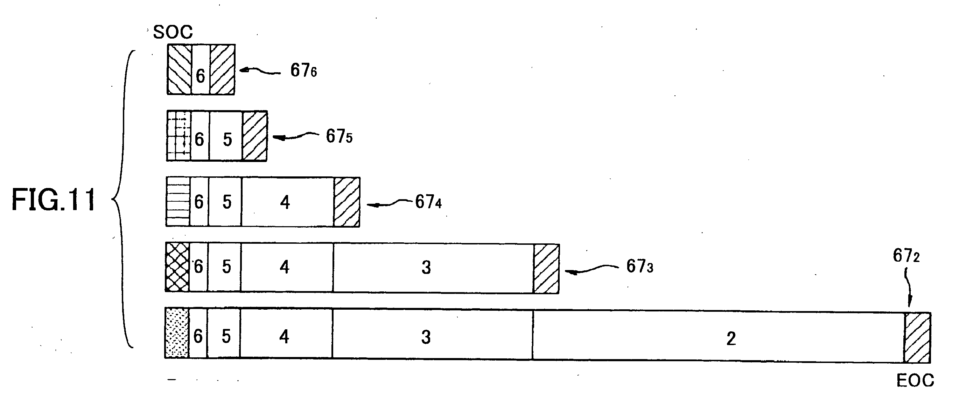

FIG. 10 shows a time required for decompression for the display to specific LL subband using the code sequence creation device and still image decompression device according to the embodiment of the present invention. FIG. 11 shows respective code streams for LL subbands of FIG. 10. The code data in this example is code streams encoded according to JPEG2000 method. As can be seen from the figure, as the higher subband (larger in the number of the subband) is directed to, i.e., for higher size reduction rate, the predominance of the present invention is remarkable in comparison to the conventional JPEG2000. This tendency appears notably increasingly as an original image becomes of a large scale and highly definition. As the rate of size reduction becomes ten or more, when the present invention is applied, as compared with the case where the data compressed by the conventional JPEG2000 method, size-reduced display of a still image can be performed quickly by the order of 1 digit..

As shown in FIG. 11, code streams 67₆, 67₅, 67₄, 67₃, 67₂ are created for the size reduction rates 1/64 of 1/32, 1/16, 1/8, and 1/4, respectively. Thus, the code sequence input into the decompression device is limited to the necessary minimum code amount.

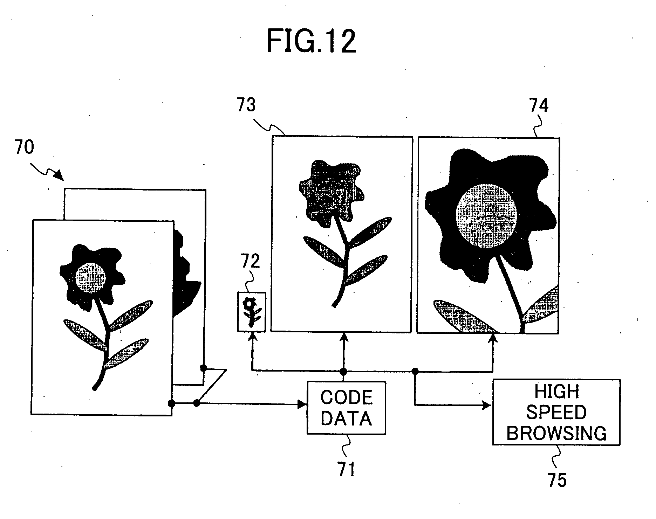

FIG. 12 illustrates various decompression modes achievable by means of the code sequence creation device and still image decompression device according to the embodiment of the present invention. As examples of these decompression modes, thumbnail display, gray scale display, specific area display, high-speed perusal/browsing display, etc. are included. For this purpose, various image data, such as image data 72 for thumbnail display, image data 73 for gray scale display, image data 74 for specific (spatial) area display, and image data 75 for high-speed perusal display, are created by means of the code sequence creation device, respectively, from the original color image 70, as shown in FIG. 12. The relevant images can be obtained directly from the corresponding image data by means of the still image decompression device without performing decompression of the whole of the given original code sequence.

Since the level number calculation unit 43 in the decompression operation setting part 42 of the code sequence creation device 40 controls the code sequence creation part 41 so that it extracts only the codes on a deep level (large in the number of subband) when a thumbnail display is achieved, merely the very few code amount of code sequence is input into the decompression device 20. When only a specific area is displayed, since the area calculation unit 44 controls the code sequence creation part 41 to make it to extract only the codes included in the corresponding tiles or precincts, the amount of codes which decompression device 20 processes can be made fewer effectively. As the component calculation unit 45 controls the code sequence creation part 41 so as to make it to extract only the codes of Y component in case of displaying a color image by gray scale, the decompression device 20 decompresses only the codes of the luminance component.

In order to achieve high speed perusing/browsing of image contents, it is enough just to limit the "level", "component", or "area" to be decompressed, as mentioned above. Furthermore, as a method of achieving further improvement in the processing speed, giving a priority in the order of decompression operations may also be included. For example, what is necessary is just to rearrange the codes in a given code sequence so that the decompression device can begin decompression operation from a central area of an image when significant information concentrates on a central area of the contents image, for example.

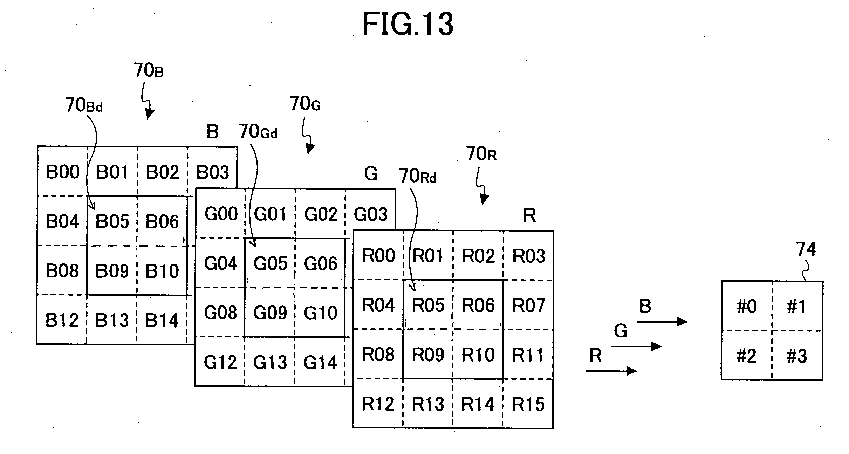

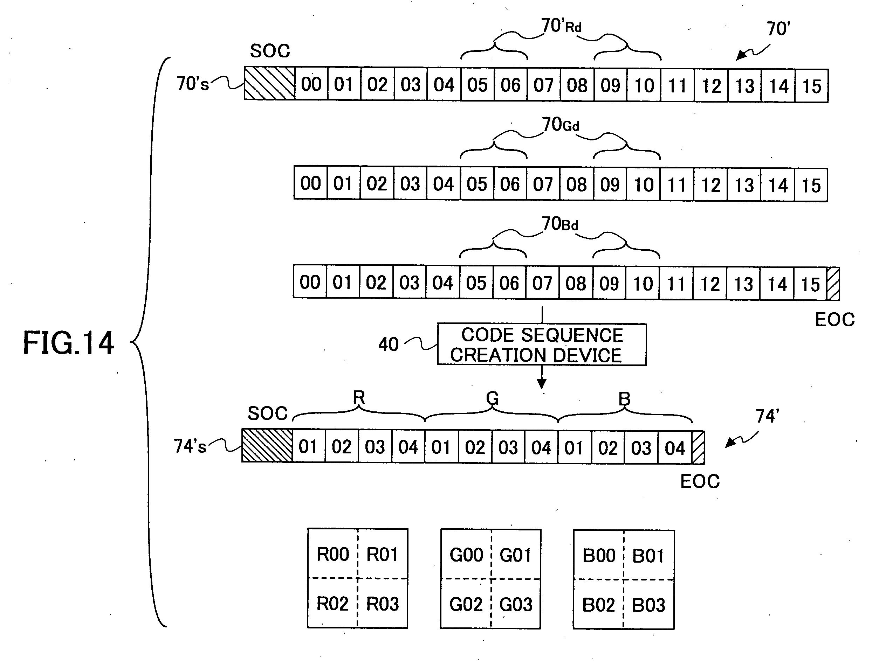

FIG. 13 illustrates a way according to the embodiment of the present invention in which codes corresponding only to a central portion of an image are made to undergo the decompression operation. FIG. 14 illustrates how to create a code stream corresponding to the way shown in FIG. 13.

As shown in FIG. 13, in this example, only the central area of the image is decompressed and displayed as an example of the image data 74 for a specific area display of FIG. 12. Specifically, the areas 70'Rd, 70'Gd, and 70'Bd (the tile numbers 05, 06, 09, and 10) corresponding to the central are actually decompressed for respective R, G and B components of image data 70'R, 70'G, and 70'B each having the 16 division tiles, and thus, the decompressed image 74 is generated. For this purpose, the code sequence creation device 40 should just delete the codes other than those of these four tiles for each color component, i.e., the codes 70'Rd, 70'Gd, and 70'Bd from the original code stream 70'. The process of this code amount reducing processing is shown in FIG. 14. The difference between the original code stream 70' and the code stream 74' newly generated by the code sequence creation device 40 is that the contents of the SOC 70S' are rewritten and become the SOC 74S', and are changed the tile number from 05 into 00, 06 into 01, 09 into 02, and 10 into 03, as shown in FIG. 14.

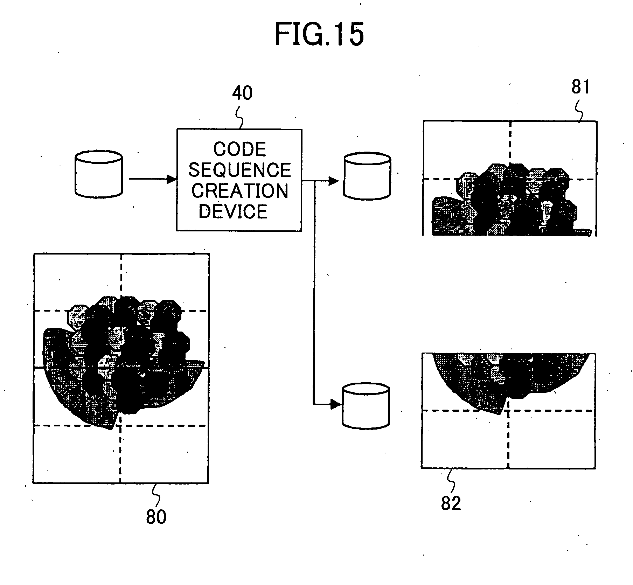

FIG. 15 illustrates another way according to the embodiment of the present invention in which the code sequence creation device provides a plurality of types of code sequences from the original one.

Specifically, in this example, the original code sequence is transformed into two types of code streams. As shown in the figure, the code sequence creation device 40 divides the original image 80 into the two rectangle areas of an upper area and a lower area, and an upper area image 81 and a lower area image 82 are generated by distributing the codes corresponding to the tiles contained to these respective areas into the two code sequences.

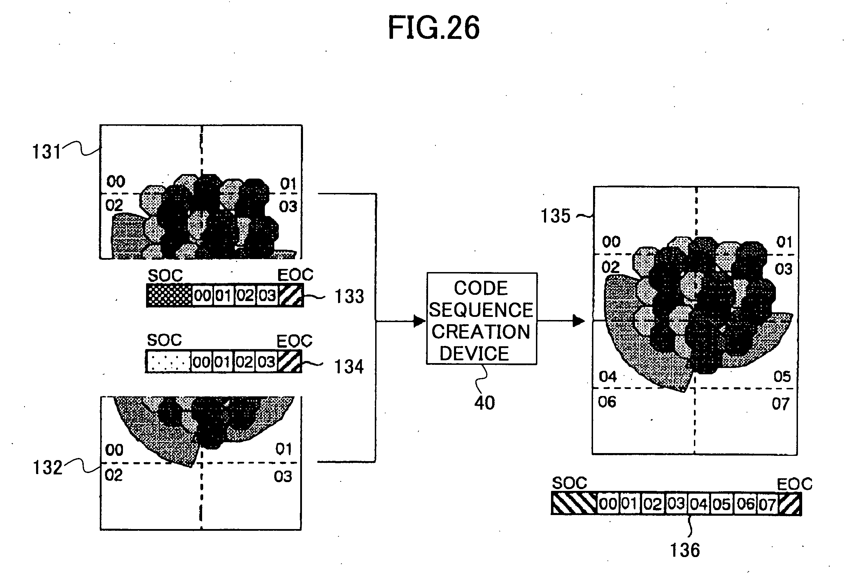

FIG. 26 shows an example in which one code sequence is created from a plurality of code sequences by the code sequence creation device according to the embodiment of the present invention. That is, two code sequences 133, 134 made from image areas 131, 132 divided into upper and lower parts from an original image are input into the code sequence creation device 40. The input code sequences 133, 134 are each divided into four tiles, then, in the code sequence creation device 40, syntactic analysis is performed on the input respective code sequences 133, 134, these tiles are combined into one code sequence 136 having eight tiles which newly express the single image 135. And the information described by the tag is rewritten into a form in which the two original code sequences 133, 134 are reflected thereon.

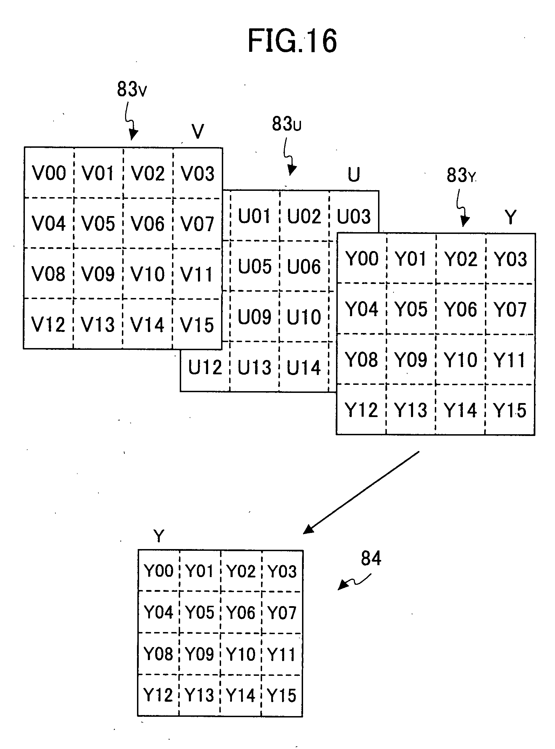

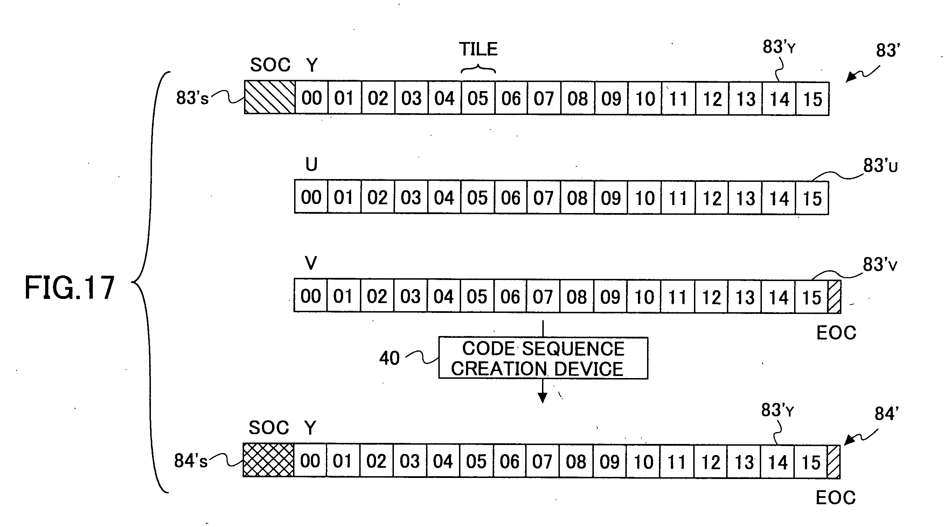

FIG. 16 illustrates another way according to the embodiment of the present invention performed by the code sequence creation device in which a component to be decompressed is limited to a luminance component, and FIG. 17 shows a code stream newly generated according the way illustrated by FIG. 16.

In the example shown in FIG. 16, in which a color original image is displayed as a grayscale image 73 for a grayscale display shown in FIG. 12. In this case, it is necessary to merely reduce the number of components of the code sequence in the relevant color space from three to one. That is, the code sequence creation device 40 performs processing by which only the luminance component 83Y is made to remain from the Y, U, and V components 83Y, 83U, and 83V. It is also possible that a size-reduction display may is performed further and the size-reduced decompressed image data 84 of grayscale display may be then generated. As shown in FIG. 17, the code stream 83' (SOC83S', 83Y', 83U', 83V', and EOC in the stated order) is transformed into the code stream 84' (SOC84S', 83Y', and EOC in this order).

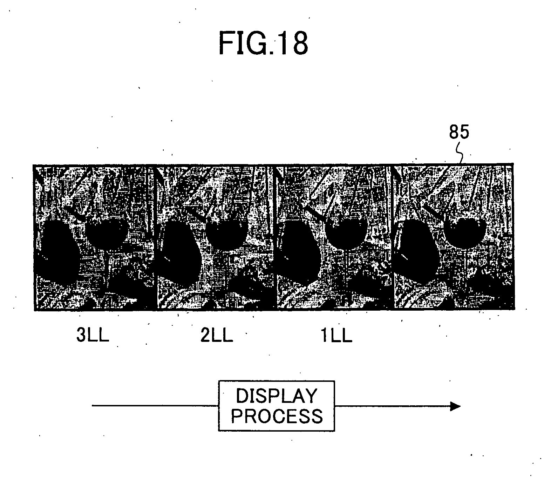

FIG. 18 illustrates another way according to the embodiment of the present invention, performed by the code sequence creation device, in which a display is made according to an order of operation with respect to the decomposition level.

As shown in FIG. 18, the decompression process at the time of making it display is performed according to the given code sequence having the order with respect to the decomposition levels. According to this may, decoding is performed one by one from wavelet coefficient values on the higher decomposition level to the lower one (larger in the number of subband to the smaller thereof, for example, from 4LL through 0LL), first, a vague image is displayed, and, then, the displayed image becomes gradually distinct, and, finally a clear image 85 is displayed. As another example of controlling the order of decompression operation, the order of layers (in bit plane, from the MSB layer through the LSB layer, or the like, for example) may be considered.

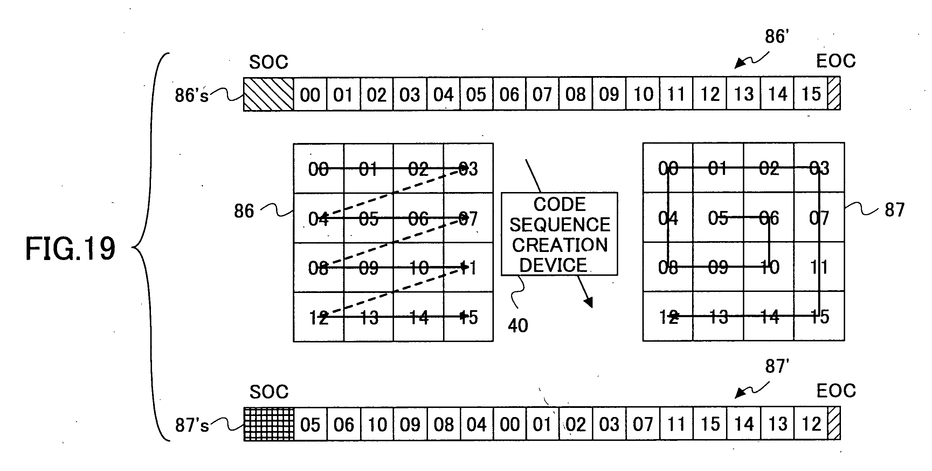

FIG. 19 illustrates another way according to the embodiment of the present invention, performedv by the code sequence creation device, in which rearranging the display order with respect to the tiles.

In an example shown in a FIG. 19, the codes in a given code sequence is changed so that the order in which the decompression operation is performed is changed from the order of raster into a spiral order with respect to the tiles, i.e., with respect to the respective spatial locations of the given image. For this purpose, one method is merely to rewrite the order described in the header 86S' is changed so that the order of decompression is changed from the raster order (tile numbers 01, 02, 03, ..., 14 and 15 as shown in image data 86) into the spiral order (tile numbers 05, 06, 10, 09, 08, 04, 00, 01, 02, 03, 07, 11, 15, 14, 13, and 12, as shown in image data 87). However, in order to improve the processing speed, it is preferable that the actual order of the codes themselves in the code sequence be re-arranged with respect to the tiles according to the order to be changed as mentioned above. In FIG. 19, the code stream 87' (having SOC 87S' as a header thereof) is obtained from the code stream 86' (having SOC 86S' as a header). This method of gradually spreading the display area outward from the central part of the image is advantageous in image data in which significant information concentrates at a spatial center.

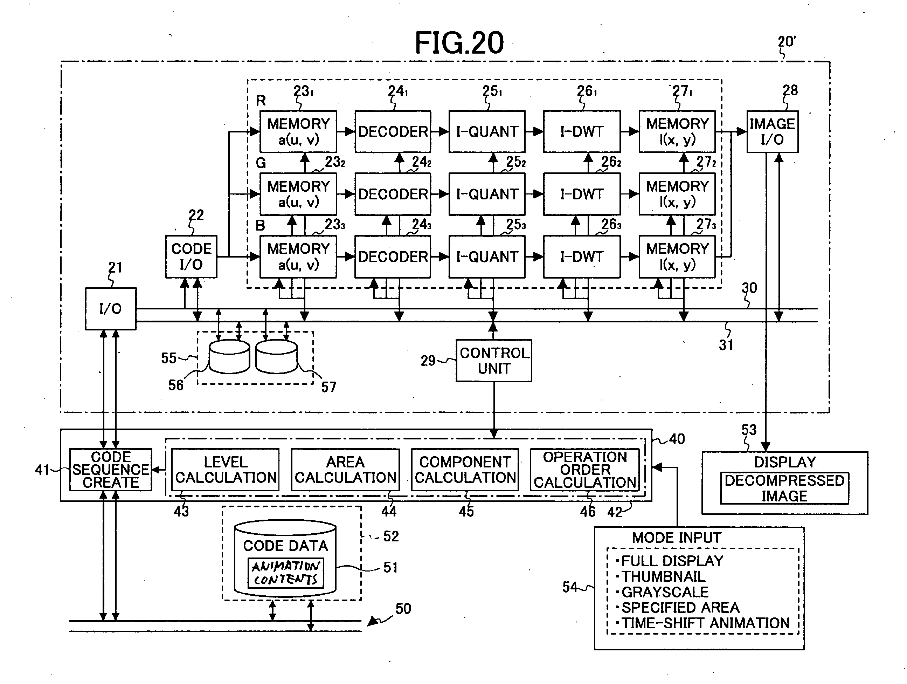

FIG. 20 shows a block diagram of a configuration of a code sequence decompression device according to another embodiment of the present invention.

The image decompression device in this embodiment is an image decompression device 20' including a code sequence storage 55 which stores a code sequence newly generated by the code sequence creation device 40, different from the above-described image decompression device of FIG. 7. In this case, when code data of animation contents stored in the storage unit 51 in the data storage device 52 on the network 50 is displayed as an animation, it is assumed that "time shift animation decompression display" and "all screen display" (full-screen display on a display device) are chosen from given display modes by a user. In this case, according to a result from the level number calculation unit 43 in the decompression operation setting part 42 of the code sequence creation equipment 40, the code sequence creation part 41 performs processing of deleting codes on unnecessary decomposition levels from the still image code sequence of each frame of the given animation data. Then, a new code stream in which the amount of codes is thus reduced is stored in a code sequence storage unit 56 provided for non-decompressed frames, of the code sequence storage device 55. After being sent to the decoder from this code sequence storage unit 56 for non-decompressed frames and then being made to undergo decompression, there, the code stream is then stored in a code sequence storage unit 57 provided for decompressed frames. Such a series of operation is performed for every frame of the animation data in sequence. These storage units may be in a type of a hard disk drive device, etc.

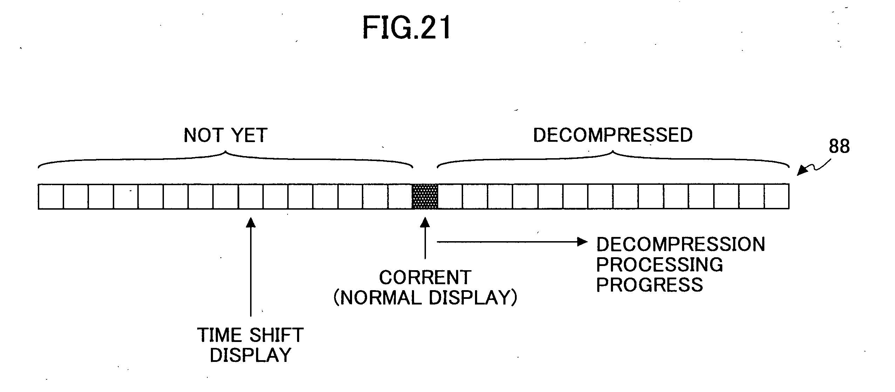

Since the code sequence including frames not yet decompressed and those already decompressed is stored in the storage device 55 as mentioned above, frames to be currently displayed may be those of the past time as a result of time shift from the present time to the past time along the series of code stream, and, then, the animation can thus be reproduced from the already decompressed and stored (in the storage unit 57) data (time-shift animation display). FIG. 21 illustrates this concept of time shift animation display operation briefly by means of a series of frames 88 arranged along the time axis.

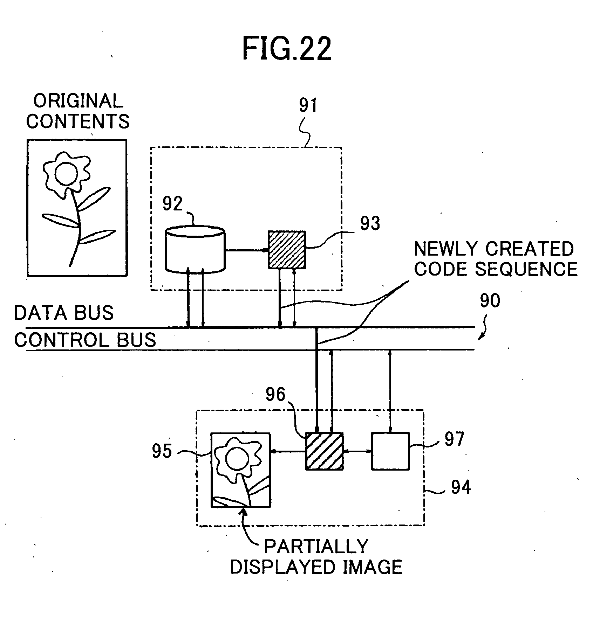

FIG. 22 illustrates an image decompression system according to another embodiment of the present invention.

In this system, a code sequence storage device 91 has a code sequence creation device 93 incorporated therein and is connected to a communications network 90. The code sequence creation device 93 creates a predetermined code steam from code data of image contents stored in a storage unit 92 in the storage device 91, according to instructions given by a control device 97 in a content search engine 94 connected to the network, and sends the created result to the content search engine (it can be said also as a content display system) 94. It is preferable that this system beforehand creates code sequences of various types so as to be able to respond to various requests from a user timely. As the code sequence thus sent to the search engine 94 is optimized beforehand for the purpose of search by the code sequence creation device 93 in a manner which may be one of the above-described various ways for reducing the code amount, the image decompression device 96 can perform decoding processing at high speed, and thus can display it on a display device 95 quickly. The above-mentioned code sequence creation device 93 is of an embedded type such as to be built into the storage device 91, and, for this purpose, this code sequence creation device 93 may be of a type of hardware, software, or a middleware, appropriately selected according to a particular installation environment.

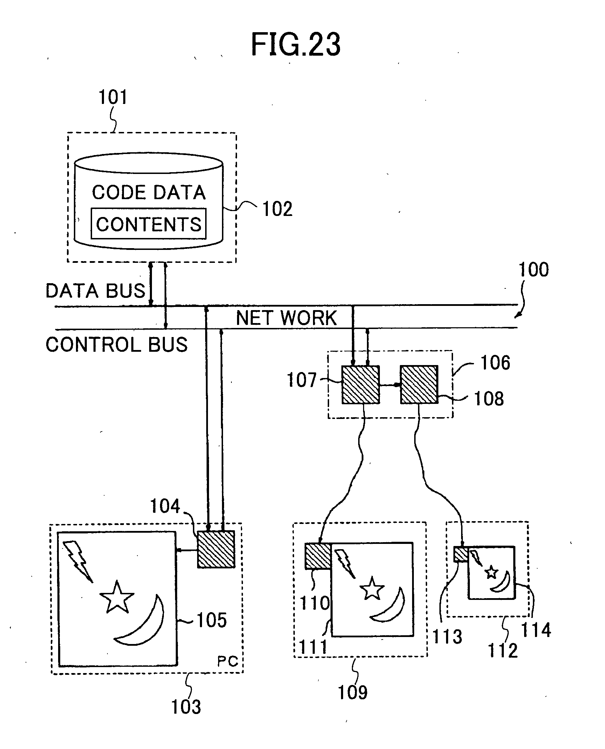

FIG. 23 illustrates an image provision system according to another embodiment of the present invention, in which a code sequence creation device according to the embodiment of the present invention is applied to display devices having various display sizes.

As shown in FIG. 23, given common image contents are used for being displayed on the display device of various display sizes, by means of the code sequence creation device according to the embodiment of the present invention. Display devices 111,114 and LSI circuits of a PDA 109 or a cellular phone 112, which are pocket apparatus, have strong restrictions placed thereon in physical size and also in power consumption rate. Therefore, about the former restriction, since the difference in displayable area is large compared with the original image stored in the data storage unit 102 of the data storage device 101 as a server, display can be made on the display device of such PDA, cellular phone or the like after sufficiently reducing the size of the image. As to the latter restriction, it is important to omit excessive operation/processing amount. A solution which fulfills both the restrictions is using only deep LL subband (the larger number thereof) coefficients of given image contents. A code sequence creation device 106 shown in FIG. 22 has a function of generating a code stream extracting only a deep subband optimized for such a small area display device.

In the example shown, a code sequence creation device 106 includes two stages prepared for display devices having different display image sizes and thus requiring different image size reduction rates. Specifically, the code sequence for the 2LL subband is created by the code sequence creation unit 107 for the PDA109, while the code sequence for the 3LL subband is created by the code sequence creation device 108 for the cellular phone 112, and sent to the respective devices via wireless channels. The original code data is on the other hand sent to a PC 103 via cable, and is displayed there at the original display size via a communications network 100 directly.

In this configuration, since decoding operation requires the minimum processing amount for each of the respective display sizes in comparison to the conventional case where decoding operation is performed throughout all the decompression levels and thus throughout all the subbands first even in case an actually displayed size is considerably reduced from the original one.

In the PC 103, the received data is decompressed by an embedded image decompression device 104. On the other hand, in the cellular phone 112 and PDA109, the received code data thus reduced in the code amount is made to undergo decompression by means of embedded image decompression devices 110 and 113, respectively, and, thus, it becomes possible to effectively reduce the time required for the decompression processing so as to display the resulting image on the display devices 111 or 114. It is also possible that the respective client devices such as cellular phone, PDA, PC and so forth have their own code sequence creation devices embedded therein instead of those provided separately as shown in the figure.

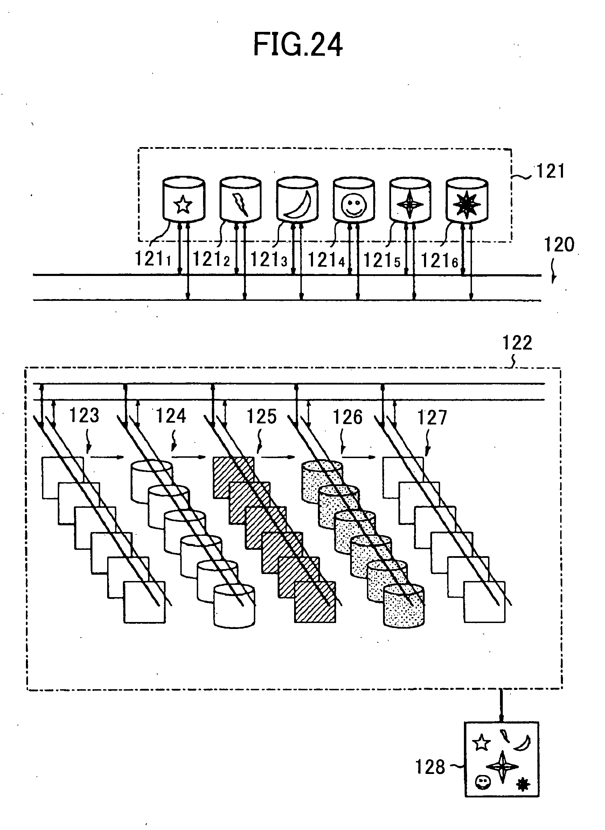

FIG. 24 illustrates an image provision system according to another embodiment of the present invention.

In this embodiment, the code sequence creation device according to the above-mentioned embodiment of the present invention is applied as a keeper (i.e., the image provision system) 122 of an image content storage 121 where various digital archives are stored. As a result of remarkable progress of broadband communications technology, it is expectable that almost all image contents are not kept individually, but are stored in an image content storage 121 built on a communications network 120. In such a system, some digital archives kept in the storage are expected as being non-compressed, raw data. In such a situation, an important role of the storage keeper 122 is knowing the contents stored in the storage(s) 121 (may be stored separately in several storage units unit 121₁, 121₂, 121₃, ... with respect to types of archives stored). In such a system, the contents of raw data may be once compressed into a JPEG2000 form by means of an image compression device(s) 123, and may be stored as a code stream in a code data storage device(s) 124. Thereby, a code sequence creation device(s) 125 may act as a search engine therefor. In this case, the code stream in JPEG2000 form is created as a lossless condition. Moreover, the code sequence creation device(s) 125 classifies this original code stream with respect to decomposition level (deep level through shallow level, i.e., for example, the LL subband of each decomposition level), spatial area (central part /peripheral part), color component (gray scale/full color), etc. The thus newly generated code sequences according to the above-mentioned classification are saved in code sequence storage device(s) 126, are used as a database for the search, and are transformed into decompressed image data by means of the image decompression device(s) 127.

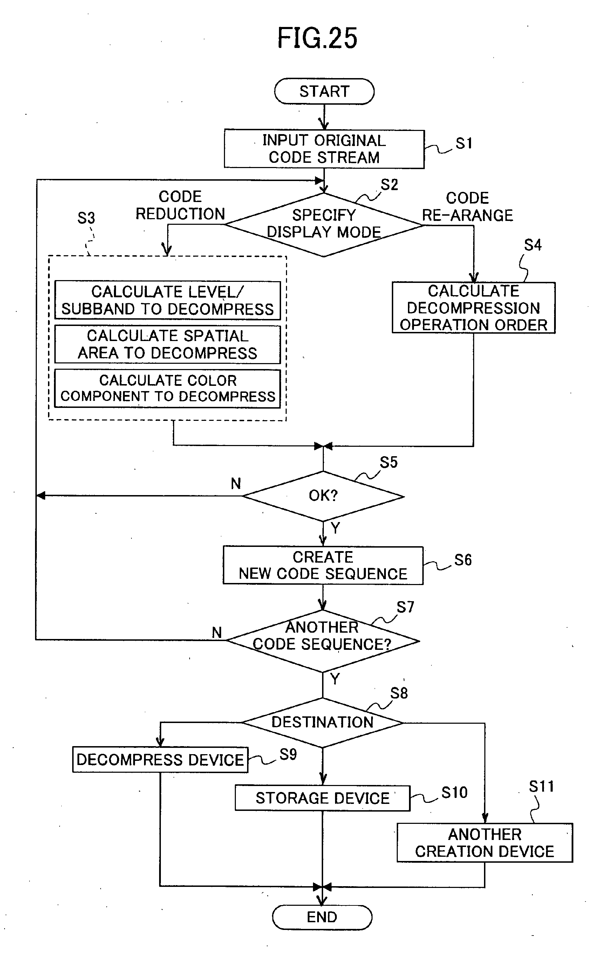

FIG. 25 is a flowchart of the code sequence creation method in the above-mentioned embodiment of the present invention.

As a method of optimizing the code sequence according to a particular purpose of an image to be obtained from decompression of given code data, an original code stream is input first (in a step S1), and a desired display mode is input by a user (in a step S2). According to the input display mode, in case of reduction in code amount is needed, calculation is performed in a step S3 for obtaining an appropriate parameter for determining specific data reduction way, i.e., with respect to a decomposition level (LL subband), a spatial area, a color component, or the like. In case codes in the code sequence should be re-arranged, calculation is made such as to obtain an appropriate order of decompression operations in a step S4. Then, when the specified display mode is fulfilled by the thus-calculated parameter(s), a new code sequence is thus created (in a step S6). When the display mode requires both the steps S3 and S4 (No in the step S5), the step S2 is returned to. Moreover, when the display mode requires another new code sequence (Yes in the step S7), the step S2 is returned to. After the step S2 is returned to, a similar process is repeated again therefrom. After all the necessary code sequence(s) is created, a destination image decompression device to which the thus-created code sequence is to be provided is selected in a step S8, and the code sequence is sent thereto in a step S9. Alternatively, it is sent to and stored in the code sequence storage device in a step S10. Alternatively, it is sent to another code sequence creation device in a step S11 for further modification. Then, the current processing is finished.

Applied examples of the system according to the present invention described above will now be described.

In an example of FIG: 27, a single code sequence 143 is obtained from combination of a plurality of code sequences 141 and 142 by means of the code sequence creation device 40 according to the above-mentioned embodiment of the present invention with an authentication key which is authentication information. The input code sequences 1.41, 142 have only image information for imperfect images 144, 145, respectively. However, by complementing mutually, it becomes possible to create the single code sequence 143 with image information which forms a perfect image 146 by combining the plurality of code sequences 141, 142.

In this system, unless the code sequence creation device 40 has the authentication key corresponding to the authentication code which the input code sequence 142 of the input two code sequences 141, 142 has, it cannot perform combination so as to obtain the perfect code sequence 143. Since the code sequence 141 does not have an authentication code, it is possible to decode it by a general image decompression device having no such an authentication key. However, a resulting decompressed image 144 is an imperfect one in tessellated condition as shown. In this system, in order to avoid unauthorized use of a copy of such an authentication key, it is preferable to provide a system such that a term during which the key is effective is recorded, and the key can be used only during this term.

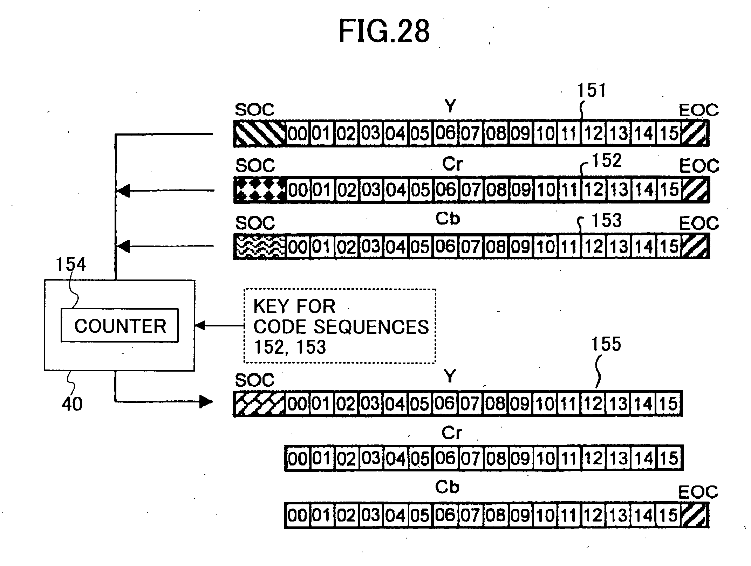

In an example of FIG. 28, input code sequences are three types of code sequences 151, 152, 153 of luminance component and color difference components of an original image. Thereamoung, the code sequence 151 of luminance component image has not an authentication code, and, thus, the code sequence creation device 40 of a system having no authentication key can decode it so as to obtain a grayscale image. However, the code sequences 152, 153 of color difference components have authentication code, and, thus, it is not possible to create a code sequence 155 with combination of the code sequences 151, 152, 153 so as to display a full color image. When the system has the authentication key for these code sequences 152 and 153 having the authentication codes, the code sequence creation device 40 of the system can combine them so as to create the code sequence 155 for the full color image.

It is possible to place a restriction on the number of times of usage of such an authentication key by means of count information of a counter 154 built in the code sequence creation device 40, for example. Namely, this counter 154 is used for counting the number of times by which the specific authentication key is used for creation of the perfect code sequence in the code sequence creation device 40. After the count value in the counter 154 reaches a predetermined number of times, the code sequence creation device 40 cannot continue creation of the relevant perfect code sequence unless a new authentication key is provided thereto, or the counter is reset.

Thereby, image information merely including predetermined limited information is provided to a general user while detailed image information is provided only to an authorized user.

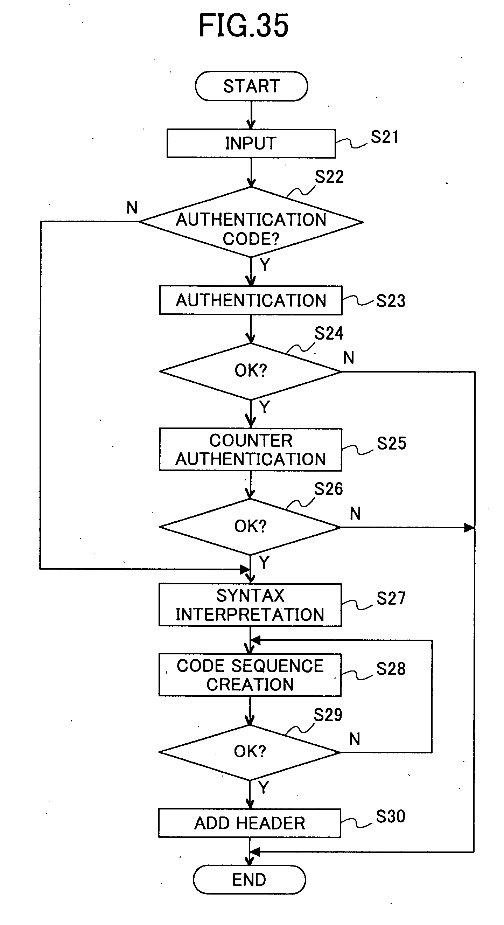

FIG. 35 shows a flowchart of processing of the code sequence creation device 40 in the system described above with reference to FIG. 28. When the plurality of code sequences 151, 1.52, 153 are input into the code sequence creation device 40 (in a step S21), it is determined by the device 40 whether or not the code sequences 151, 152, 153 have authentication codes (in a step S22). When they have authentication codes (Yes in the step S22), the device 40 performs predetermined authentication operation by means of an authentication key, etc., and, then, determines whether or not the count value in the counter 154 reaches a predetermined value (in steps S23 and S24). After that, the device 40 performs syntax interpretation on the code sequences 151, 152, 153 (in a step S27), and performs creation of the combined code sequence 155 (in steps S28 and S29). And then, the device 40 adds a new header to the thus-created code sequence 155 (in a step S30), and the current processing is finished. When the device 40 has no relevant authentication key and thus, the predetermined authentication cannot be achieved (No in the step S24), or the count value of the counter 154 reaches the predetermined value (No in the step S26), the current processing is finished immediately.

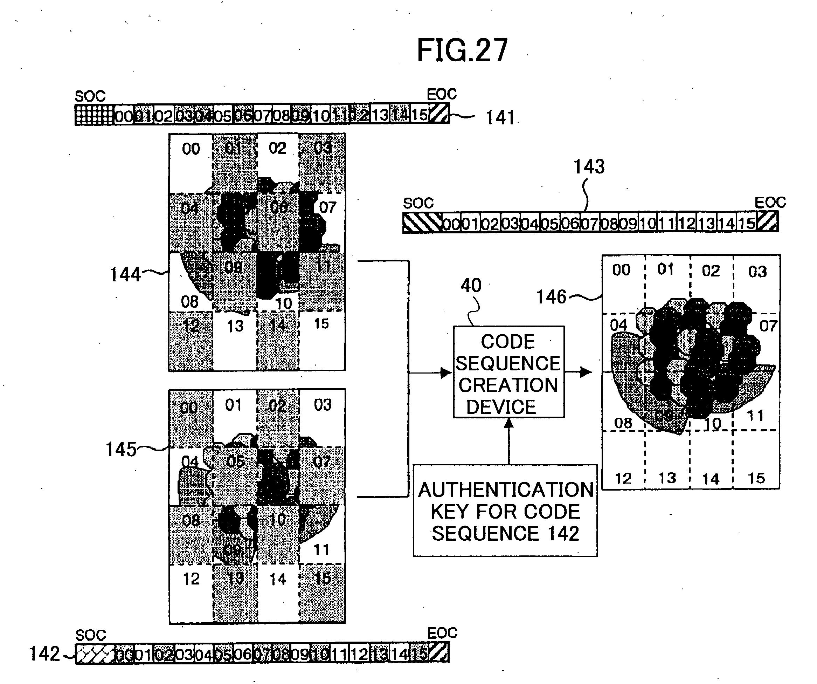

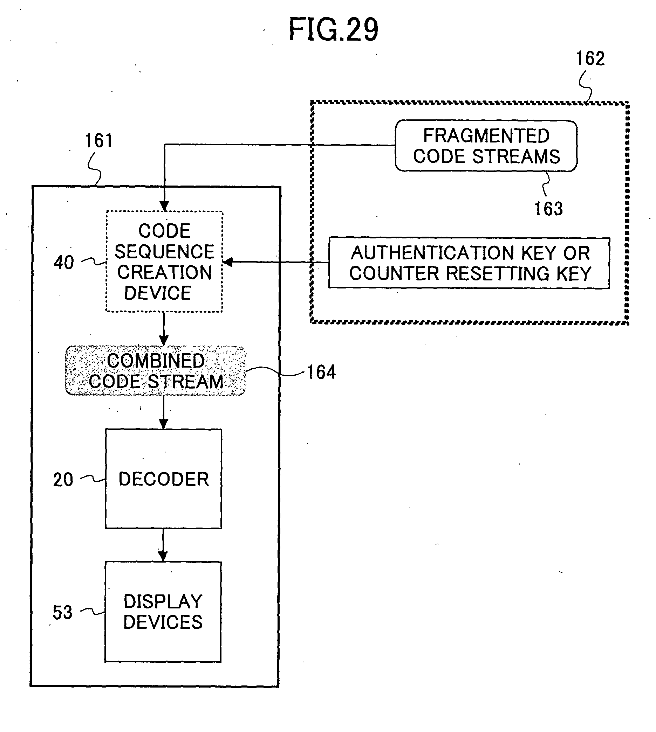

FIG. 29 shows a conceptual diagram illustrating an example of application of the system described above with reference to FIGS. 27 and 28 into an information terminal device 161. This information terminal device 161 is, actually, a device which a user directly uses, such as a personal computer, a TV receiver, a CATV receiver, a cellular phone, a personal digital assistant device (PDA), or the like. The system according to the embodiments of the present invention described above, i.e., the code sequence creation device 40, image decompression device 20, and display device 53 are beforehand built into this information terminal device 161 in this case.

On the other hand, a content provider 162, such as a broadcasting operator or an image information provider prepares an authentication key or a key for resetting the count value of the counter 154, as well as distributing code sequences 163 of image contents in a condition of fragments and thus made into an imperfect state beforehand.

The content provider 162 distributes the authentication key or the key for counter reset, in response to a request by a user for value. The key for counter reset can reset the above-mentioned counter 154 so as to enable creation of the code sequence 164 by combination of the given fragmented code sequences at any time. Thereby, the counter value of contents can be properly obtained from the user. Moreover, the user can determine the contents even with originally given code sequences of such an imperfect state, i.e., in a fragmented state, before actual payment.

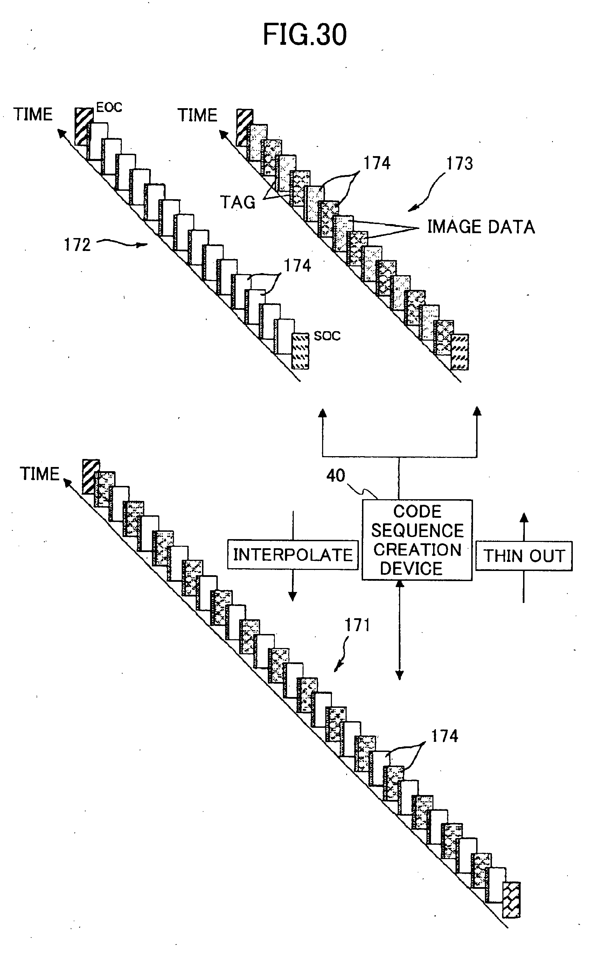

An example will now be described in which a code sequence for motion still images is processed by the above-descried system, with reference to FIG. 30. That is, from a code sequence 171 containing all the frames 174 that form a series of video, the code sequence creation device 40 creates code sequences 172, 173 through thinning out every odd frame 174 or every even frame 174. Thereby, the code sequence is divided into a plurality of code sequences each of which has a reduced code amount.

Inversely, it is also possible to create by means of the code sequence creation device 40 the code sequence 171 containing all the frames 174 through combination of the two code sequences 172, 173 each of which includes only odd frames 174 or even frame.

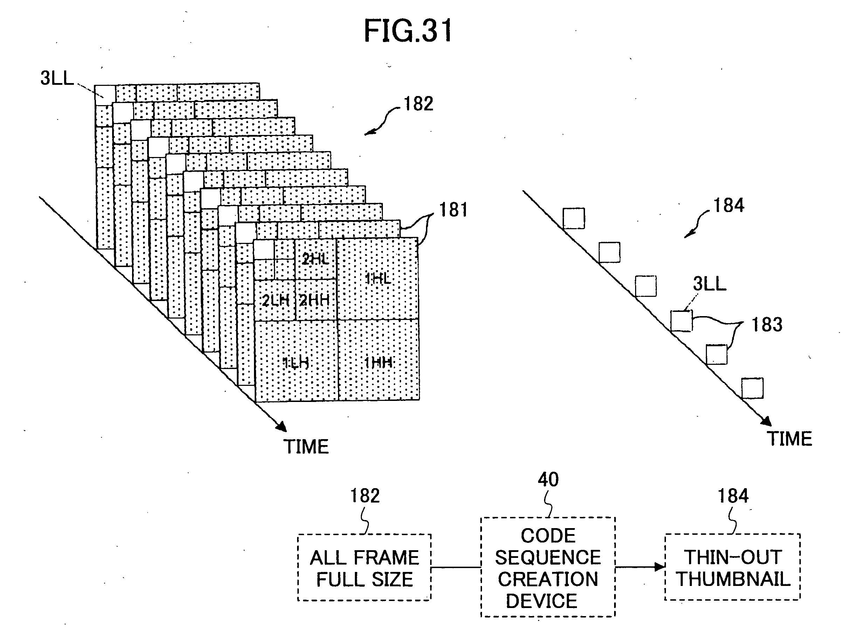

These functions can be utilized in rapid-traverse display or smooth display of motion still images. Furthermore, in addition to thinning out even frames or odd frames described above, it is also possible to extract only wavelet coefficients on deep decomposition level (large number of subband) with deleting the wavelet coefficients on the remaining shallower decomposition levels. Thereby, it becomes possible to achieve thumbnail display of motion still images. FIG. 31 illustrates this example. That is, a code sequence 184 which takes only the codes 183 of 3LL subbands on the decomposition level 3 can be created, for example, from the full-size code sequence 182 of all the frames 181 of video.

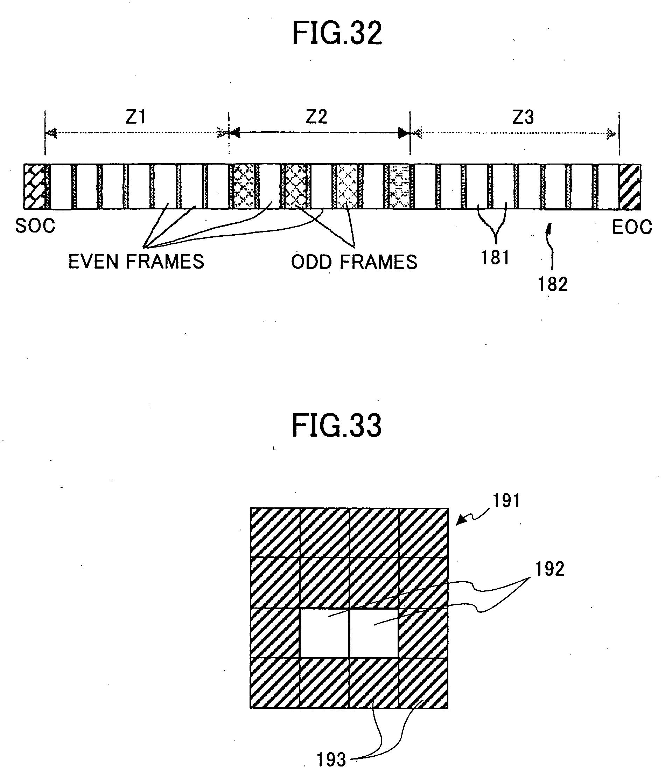

FIG. 32 shows another example of thinning out frames 181, from a perfect code sequence 182 containing all the frames 181, in the example described above with reference to FIG. 31. That is, all the frames 181 are used for display without thinning out any frames 181 for a time zone (Z2) in which quick motion occurs, while thinning out of every even frames or every odd frames is performed for a time zone (Z1, Z3) in which no such quick motion occurs in the relevant video. Thereby, it becomes possible to improve visual image quality of the video.

As a method of detecting whether such quick motion occurs in given video data, it is possible to achieve this detection by calculate the code amount in the payload part of the code stream 182 and compare the calculation result between adjacent frames 181. In this way, when the difference of the calculated code amount is large between the precede and present frames 181, it can be determined that a change occurs in the motion. That is, it can be expected that a quick motion occurs in the relevant scene. Moreover, determination as to whether or not a quick motion occurs can be achieved by comparison in the difference of the calculated code amounts with a predetermined threshold. Furthermore, by detecting the quickness in the motion of the given animation finely for every- unit of spatial area, subband, and color component, detailed control of the above-mentioned frame-thinning-out operation can be achieved.

FIG. 33 expresses the situation of display of screen 191 of the video obtained in this way. For a spatial area of two tiles 192, it is determined as having a quick motion occurring therein, all the frames 181 of still images are used for the display. Furthermore, for this area, a color image is displayed with high resolution. For the other spatial area of tiles 193, it is determined that not very quick motion occurs, a grayscale indication of still images of only the even frames 181 is made with low resolution, for example.

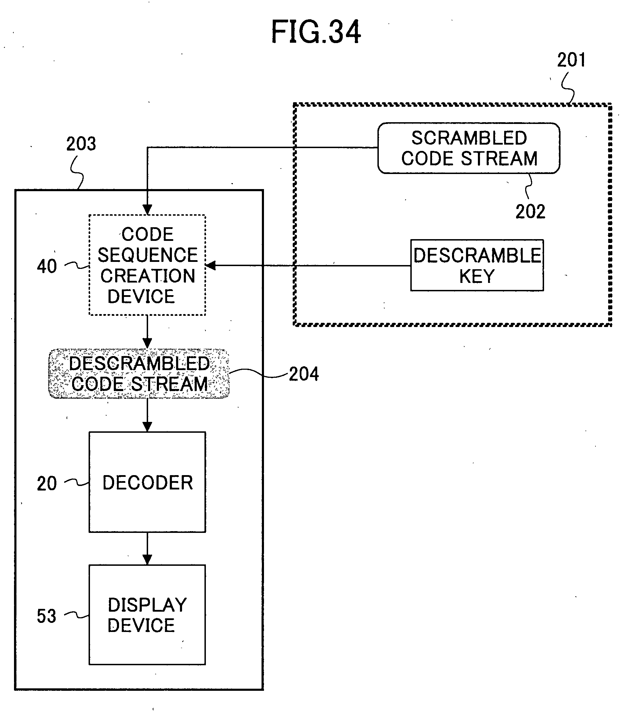

FIG. 34 shows a specific example of application of code stream distribution of motion still images described above. That is, a content provider 201 distributes a code stream 202 having the order of frames re-arranged in the code sequence at random. Simultaneously, the provider 201 has a descrambling key used for correcting/descrambling the above-mentioned rearrangement of the frames so as to restore the original motion still images having the proper order in frames. An information terminal device 203 is specifically a personal computer, a TV receiver, a CATV receiver, a cellular phone, or a personal digital assistant device (PDA) which a user uses. This information terminal device 203 has the code sequence creation device 40, image decompression device 20, display device 53, and so forth according to the embodiments of the present invention incorporated (installed) therein beforehand in a form of application software or the like.

As a result of receiving the above-mentioned descrambling key from the content provider 201 for value, a user can correct the random rearrangement of the order of frames in code sequence into the right order in the given code stream 202, and can get the code stream 204 whose order of frames is the right one, by means of the code sequence creation device 40. Therefore, the user can decompress the thus-obtained code stream so as to obtain the motion still images and can see the contents of video properly. It is also possible that, when the content provider 201 first rearranges the order of frames in the code stream at random, the code sequence creation device 40 is used.

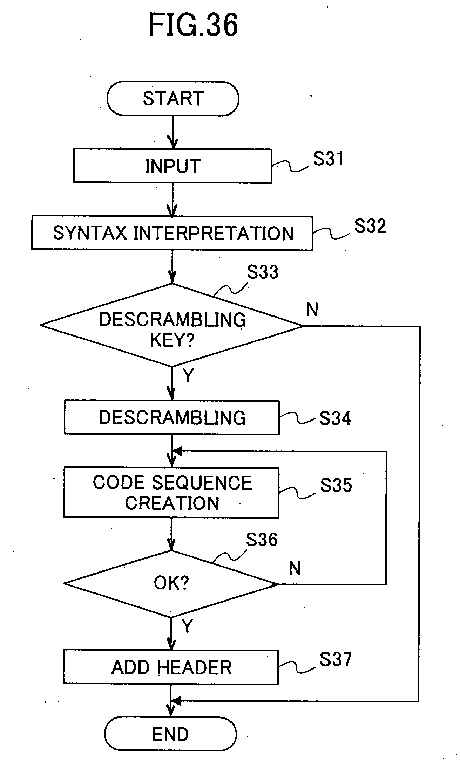

FIG. 36 shows a flow chart of the processing of the code sequence creation device 40 for performing in the above-mentioned information terminal device 203. When a code sequence 202 of motion still images is input into the code sequence creation device 40 (in a step S31), syntax interpretation operation is performed on the code sequence 202 in a step S32. Then, in a step S33, the device 203 determines whether or not describing key is provided. When the descrambling key is provided (Yes in the step S33), descrambling operation is performed on the code sequence 202 therewith (in a step S34), the frame order is corrected (descrambled), and, thus, a new code sequence 204 is created, by the code sequence creation device 40, in steps S35 and S36. And then, a new header is added to the created code sequence 204 (in a step S37), and the processing is finished. When the descrambling key is not provided (No of the step S33), the processing is finished immediately. In this case, the user cannot obtain the proper motion picture data to be displayed accordingly.

Further, the present invention is not limited to the above-described embodiments, and variations and modifications may be made without departing from the basic concepts of the present invention.

The present application is based on Japanese priority applications Nos. 2001-290196 and 2002-197730, filed on September 21, 2001 and July 5, 2002, respectively, the entire contents of which are hereby incorporated by reference.

## Claims

1. A code sequence creation device comprising:
a syntax interpretation part (12) interpreting a syntax of a given code sequence; and
a code sequence creation part (13) creating another code sequence from the given code sequence based on the syntax interpreted by said syntax interpreting part,
wherein the given code sequence and the other code sequence both comprise code sequence decompressable to be transformed into still image data.

2. The code sequence creation device as claimed in claim 1, wherein:
said code sequence creation part comprises a code amount reduction part reducing the code amount of the given code sequence.

3. The code sequence creation device as claimed in claim 1, wherein:
said code sequence creation part comprises an order re-arrangement part re-arranging the order of codes in the given code sequence.

4. The code sequence creation device as claimed in claim 1, wherein:
said code sequence creation part comprises a multi sequence creation part creating a plurality of code sequences from the given code sequence.

5. The code sequence creation device as claimed in claim 1, wherein:
said code sequence creation part comprises a single sequence creation part creating a single code sequence from a plurality of given code sequences.

6. The code sequence creation device as claimed in claim 1, wherein:
said code sequence creation part is allowed to create the other code sequence, only when predetermined authentication information is given, for the given code sequence having predetermined identification information.

7. The code sequence creation device as claimed in claim 6, further comprising a counter part (154) counting times of usage of the authentication information,
wherein said code sequence creation part is allowed to create the other code sequence for the given code sequence having the predetermined identification information only until the count value of said counter part reaches a predetermined value.

8. The code sequence creation device as claimed in claim 1, wherein:
the given code sequence has header information;
said syntax interpretation part performs syntax interpretation operation based on the header information; and
said code sequence creation part comprises a header adding part adding other header information to the other code sequence created by said code sequence creation part.

9. The code sequence creation device as claimed in claim 1, wherein:
the given code sequence comprises a code sequence of animation in which a plurality of successive still images are used as respective frames.

10. The code sequence creation device as claimed in claim 1, wherein:
the given code sequence and the other code sequence to be created both comprise code sequences in accordance with the provisions of JPEG2000 (ISO/IEC FCD 15444-1).

11. The code sequence creation device as claimed in claim 1, wherein:
the given code sequence and the other code sequence to be created both comprise code sequences in accordance with the provisions of Motion-JPEG2000 (ISO/IEC FCD 15444-3).

12. The code sequence creation device as claimed in claim 1, further comprising a specification part (54) for specifying the contents of the other code sequence to be created.

13. The code sequence creation device as claimed in claim 12, wherein:
said specification part (43) is used for specifying a decomposition level thereof by which the given code sequence is defined into the other code sequence.

14. The code sequence creation device as clamed in claim 12, wherein:
said specification part (44) is used for specifying a spatial area by which the given code sequence is defined into the other code sequence.

15. The code sequence creation device as clamed in claim 12, wherein:
said specification part (45) is used for specifying a color component by which the given code sequence is defined into the other code sequence.

16. The code sequence creation device as clamed in claim 12, wherein:
said specification part (46) is used for specifying an order of decompression operations to be performed on the given code sequence.

17. The code sequence creation device as claimed in claim 13, wherein:
said specification part is used for specifying the spatial area in units of tiles or precincts.

18. The code sequence creation device as clamed in claim 15, wherein:
said specification part is used for specifying that the color component of the other code sequence be of a color space of any one of an RGB color space of red, green and blue; a YUV color space of luminance, color difference in blue and color difference in red; a YCbCr color space of luminance, color difference in blue and color difference in red; and a CMY color space of cyan, magenta and yellow.

19. The code sequence creation device as clamed in claim 16, wherein:
said specification part is used for specifying the order of decompression operations with respect to the decomposition level or with respect to the layer concerning bit plane.

20. The code sequence creation device as clamed in claim 16, wherein:
said specification part is used for specifying the order of decompression operations according to a predetermined priority order with respect to spatial area.

21. The code sequence creation device as clamed in claim 12, wherein:
said specification part is used for specifying predetermined frames of animation in case the given code sequence comprise a code sequence of animation.

22. The code sequence creation device as clamed in claim 21, wherein:
said specification part is used for selecting the predetermined frames so as to thin out from those on a scene in which no quick motion occurs.

23. An image decompression system comprises:
the code sequence creation device (93) claimed in claim 1;
a code sequence storage device (92) storing the code sequence created by said code sequence creation device; and
a still image decompression device (96) decompressing the code sequence stored in said code sequence storage device.

24. An image decompression apparatus comprising the code sequence creation device (40) claimed in claim 1, connected with communications network, and decompressing a code sequence obtained through the communications network (50) according to a manner unique to said apparatus by means of said code sequence creation device.

25. An image provision system comprising:
the code sequence creation device (93) claimed in claim 4;
a plurality of code sequence storage devices (92) storing a plurality of different code sequences created by said code sequence creation device; and
a transmission part which, in response to a request given via a communications network, the code sequence selected from those stored by said plurality of code sequence storage devices suitable to a particular device from which said request was given.

26. An image provision system comprising:
the code sequence creation device (93) claimed in claim 1; and
a code sequence storage (92) comprising a plurality of storage units spread through a communications network (90) and storing the code sequences created by said code sequence creation device.

27. The image provision system as claimed in claim 26, further comprising a search device (94) searching the code sequences stored in the plurality of storage units for a code sequence on a desired still image.

28. A code sequence creation method comprising the steps of:
a) interpreting a syntax of a given code sequence; and
b) creating another code sequence from the given code sequence based on the syntax interpreted by said step a),
wherein:
the given code sequence and the other code sequence both comprises code sequences decompressable into still image data; and
said step b) comprises at least one of b-1) reducing the code amount, b-2) re-arranging the order of codes, b-3) combining a plurality of given code sequences and b-4) dividing the given code sequence into a plurality of code sequences.

29. An image decompressing method comprising the step of:
decompressing the code sequence created according to the code sequence creation method claimed in claim 28.

30. A computer readable recording medium storing therein a software program for causing a computer to perform the functions of:
a syntax interpretation part interpreting a syntax of a given code sequence; and
a code sequence creation part creating another code sequence from the given code sequence based on the syntax interpreted by said syntax interpreting part,
wherein the given code sequence and the other code sequence both comprise code sequence decompressable to be transformed into still image data

31. The computer readable recording medium as claimed in claim 30, wherein:
said code sequence creation part comprises a code amount reduction part reducing the code amount of the given code sequence.

32. The computer readable recording medium as claimed in claim 30, wherein:
said code sequence creation part comprises a sequence re-arrangement part re-arranging the order of codes in the given code sequence.

33. The computer readable recording medium as claimed in claim 30, wherein:
said code sequence creation part comprises a multi-sequence creation part creating a plurality of code sequences from the given code sequence.

34. The computer readable recording medium as claimed in claim 30, wherein:
said code sequence creation part comprises a single sequence creation part creating a single code sequence from a plurality of given code sequences.

35. The computer readable recording medium as claimed in claim 30, wherein:
said code sequence creation part is allowed to create the other code sequence, only when predetermined authentication information is given, for the given code sequence having predetermined identification information.

36. The computer readable recording medium as claimed in claim 35, wherein said software program further comprising a counter part counting times of usage of the authentication information,
wherein said code sequence creation part is allowed to create the other code sequence for the given code sequence having the predetermined identification information only until the count value of said counter part reaches a predetermined value.

37. The computer readable recording medium as claimed in claim 30, wherein:
the given code sequence has header information;
said syntax interpretation part performs syntax interpretation operation based on the header information; and
said code sequence creation part comprises a header adding part adding other header information to the other code sequence created by said code sequence creation part.

38. The computer readable recording medium as claimed in claim 30, wherein:
the given code sequence comprises a code sequence of animation in which a plurality of successive still images are used as respective frames.

39. The computer readable recording medium as claimed in claim 30, wherein:
the given code sequence and the other code sequence to be created both comprise code sequences according to the provisions of JPEG2000 (ISO/IEC FCD 15444-1).

40. The computer readable recording medium as claimed in claim 30, wherein:
the given code sequence and the other code sequence to be created both comprise code sequences according to the provisions of Motion-JPEG2000 (ISO/IEC FCD 15444-3).

41. The computer readable recording medium as claimed in claim 30, wherein said software program further performs the function of a specification part for specifying the contents of the other code sequence to be created.

42. The computer readable recording medium as claimed in claim 41, wherein:
said specification part is used for specifying a decomposition level thereof by which the given code sequence is defined into the other code sequence.

43. The computer readable recording medium as clamed in claim 41, wherein:
said specification part is used for specifying a spatial area by which the given code sequence is defined into the other code sequence.

44. The computer readable recording medium as clamed in claim 41, wherein:
said specification part is used for specifying a color component by which the given code sequence is defined into the other code sequence.

45. The computer readable recording medium as clamed in claim 41, wherein:
said specification part is used for specifying an order of decompression operations to be performed on the given code sequence.

46. The computer readable recording medium as claimed in claim 42, wherein:
said specification part is used for specifying the spatial area in units of tiles or precincts.

47. The computer readable recording medium as clamed in claim 44, wherein:
said specification part is used for specifying that the color component of the other code sequence be of a color space of any one of an RGB color space of red, green and blue; a YUV color space of luminance, color difference in blue and color difference in red; a YCbCr color space of luminance, color difference in blue and color difference in red; and a CMY color space of cyan, magenta and yellow.

48. The computer readable recording medium as clamed in claim.45, wherein:
said specification part is used for specifying the order of decompression operations with respect to the decomposition level or with respect to the layer concerning bit plane.

49. The computer readable recording medium c as clamed in claim 45, wherein:
said specification part is used for specifying the order of decompression operations according to a predetermined priority order with respect to spatial area.

50. The computer readable recording medium as clamed in claim 41, wherein:
said specification part is used for specifying predetermined frames of animation in case the given code sequence comprise a code sequence for animation.

51. The computer readable recording medium as clamed in claim 50, wherein:
said specification part is used for selecting the predetermined frames so as to thin out from those on a scene in which no quick motion occurs.
